# EUROPÄISCHE PATENTANMELDUNG

(11) **EP 3 444 508 A1**
(43) Veröffentlichungstag der Anmeldung: **20.02.2019**
(21) Anmeldenummer: 17186627.0
(22) Anmeldetag: 17.08.2017
(51) Int. Cl.: F16K 7/06

(54) **QUETSCHVENTIL**

(71) Anmelder: Sartorius Stedim Biotech GmbH, 37079 Göttingen (DE)
(72) Erfinder: REGEN, Thomas, 37079 Göttingen (DE); PURMANN, Sebastian, 37073 Göttingen (DE); WEITEMEIER, Swen, 37139 Lödingsen (DE); GRIMM, Dr. Christian, 37308 Heilbad Heiligenstadt (DE); BÖTTCHER, Lars, 34212 Melsungen (DE)
(74) Vertreter: Michalski Hüttermann & Partner Patentanwälte mbB

(57) **Zusammenfassung**

Beschrieben ist ein Quetschventil mit einem Ventilkörper (4) mit genau einem von einer Umfangswand (21) umschlossenen Strömungskanal (20), der an einem ersten Ende eine für den Anschluss eines Verbindungsglieds (2) ausgelegte oder an ein Verbindungselement (2a) angrenzende Eingangsöffnung (24) und an einem zweiten Ende eine für den Anschluss eines Verbindungsglieds (2) ausgelegte oder an ein Verbindungselement (2a) angrenzende Ausgangsöffnung (25) aufweist. Der Ventilkörper (4) hat weiterhin ein Paar Kraftübertragungselemente (19, 19'), oder ein Kraftübertragungselement (19) und ein Fixierelement (26), die mit der Umfangswand (21) in einem zentralen Schließbereich (18) verbunden sind, der zwischen Eingangsöffnung und Ausgangsöffnung angeordnet ist. Die Kraftübertragungselemente (19, 19') oder das Kraftübertragungselement (19) und das Fixierelement (26) sind zumindest im Wesentlichen senkrecht zur Flussrichtung des Strömungskanals (20) angeordnet. Die Umfangswand (21) besteht aus einem elastischen Material, so dass die Kraftübertragungselemente (19, 19'), oder das Kraftübertragungselement (19) und das Fixierelement (26), bei Einwirkung einer Druck- oder Zugkraft senkrecht zur Flussrichtung des Strömungskanals (20) gegeneinander verschiebbar sind. Im zentralen Schließbereich (18) weist die Umfangswand (21) einen von einem Kreis verschiedenen Querschnitt auf. Die Umfangswand (21) umschließt im Querschnitt eine Fläche des Strömungskanals (20), die zumindest im Wesentlichen über den gesamten Ventilkörper (4) konstant ist. Dadurch ist die mittlere Strömungsgeschwindigkeit an allen Positionen entlang des Ventilkörpers (4) zumindest im Wesentlichen einheitlich.

## Beschreibung

### TECHNISCHES GEBIET

Bereitgestellt wird ein Quetschventil, insbesondere ein Quetschventil zum Regeln des Flusses eines Fluids durch einen Schlauch.

### HINTERGRUND

In den letzten Jahren werden in der biopharmazeutischen Industrie verstärkt EinwegKomponenten (single use components) verwendet. Dabei werden diese nicht mehr nur im Bereich der Produkt- und Prozessentwicklung eingesetzt, sondern auch im Bereich der "Clinical Trial Manufacturing" für das Zulassungsverfahren und sogar in der kommerziellen GMP-Fertigung von Arzneimitteln. Ein illustratives Beispiel eines in der biopharmazeutischen Industrie relevanten Verfahrensschritts ist die Ultra- / Diafiltration zur Volumenreduktion in der Form der Cross-Flow Filtration oder Querstromfiltration, auch Tangentialfluss-Filtration genannt. Im Gegensatz zur Durchlauf-Filtration wird bei der Cross-Flow Filtration die zu filtrierende Flüssigkeit mit hoher Fließgeschwindigkeit parallel zur Filtermembran geführt, so dass eine Kuchenbildung vermieden wird. Das Retentat verbleibt im Pumpkreislauf und wird konzentriert.

Ein wichtiger Parameter zur Steuerung dieses Prozessschritts ist der sogenannte Transmembrandruck als Differenzdruck zwischen Permeat und Retentatseite. Zur Einstellung dieser Größe müssen Druck- und Durchflussmenge regelbar sein. Dies wird in den allermeisten Fällen über eine Pumpe in Kombination mit einem Regelventil realisiert. Beim Einsatz von Einwegkomponenten kann dies wahlweise über sog. Schlauchquetschventile oder über Membranregelventile erfolgen.

Ein Quetschventil enthält in der Regel ein elastisches Schlauchstück, durch das das Füllfluid strömt. Das elastische Schlauchstück befindet sich typischerweise in einem festen Gehäuse. Durch Zuführung eines Druckes senkrecht zur Strömungsrichtung des Füllfluids wird das elastische Schlauchstück lippenförmig verformt und geschlossen, sodass der Fluidstrom durch das Quetschventil gestoppt wird. Der Druck kann durch ein Fluid wie ein Gas oder durch ein anderes Betätigungsmittel erfolgen. Ein Beispiel eines Schlauchquetschventils ist in der Europäischen Patentanmeldung EP 2 682 652 A1 offenbart. Diese Ausführungsform eines Schlauchquetschventils enthält zwei sich diametral gegenüber liegende Stempelglieder, die mechanisch aufeinander zu bewegt werden können.

Ein Membranventil enthält einen Ventilkörper mit einem Zufluss und einem Abfluss, eine Membran und einen Dichtsteg. Der Dichtsteg wird auf die Membran zu bewegt. Zum vollständigen Öffnen des Ventils muss die Membrane nur wenig verformt werden. Daneben gibt es Ventile, die an Stelle des Stegs einen Tiefsitz enthalten, auf dem die Membran das Ventil schließt. Bei derartigen Ventilen, die z.T. im Bereich Abwasser, Papierherstellung oder Düngemittelherstellung verwendet werden, handelt es sich allerdings nicht um Membranventile im Sinne der Normung.

### ZUSAMMENFASSUNG

Ein hier offenbartes Quetschventil kombiniert die Flexibilität und Durchflussgeometrie eines Schlauchquetschventils im single-use Bereich mit der Regelperformance eines Membranventils. Dadurch wird eine optimierte Prozesssteuerung bei geringer unerwünschter Scherkraft möglich.

Gemäß einem ersten Aspekt wird ein Quetschventil bereitgestellt. Das Quetschventil weist einen Ventilkörper und ein erstes und ein zweites Kraftübertragungselement, oder ein Kraftübertragungselement und ein Fixierelement auf. Der Ventilkörper weist genau einen Strömungskanal auf, der von einer Umfangswand umschlossen ist. Der Strömungskanal des Ventilkörpers weist ein erstes Ende und ein zweites Ende auf. Am ersten Ende befindet sich eine Eingangsöffnung. Die Eingangsöffnung kann für den Anschluss eines Verbindungsglieds ausgelegt sein. Die Eingangsöffnung kann auch an ein Verbindungselement angrenzen. Das Verbindungsglied bzw. das Verbindungselement kann beispielsweise zum Anschließen eines Rohrs oder eines Schlauchs ausgelegt sein. Am zweiten Ende befindet sich eine Ausgangsöffnung. Die Ausgangsöffnung kann für den Anschluss eines Verbindungsglieds ausgelegt sein. Die Ausgangsöffnung kann auch an ein Verbindungselement angrenzen. Das Verbindungsglied bzw. das Verbindungselement kann beispielsweise zum Anschließen eines Rohrs oder eines Schlauchs ausgelegt sein. Das erste und das zweite Kraftübertragungselement, oder das Kraftübertragungselement und das Fixierelement, sind mit der Umfangswand des Strömungskanals in einem zentralen Schließbereich verbunden. Dieser zentrale Schließbereich ist zwischen Eingangsöffnung und Ausgangsöffnung angeordnet. Das erste und das zweite Kraftübertragungselement, oder das Kraftübertragungselement und das Fixierelement, sind mit der Umfangswand so verbunden, dass die Kraftübertragungselemente bzw. das Kraftübertragungselement und das Fixierelement zumindest im Wesentlichen senkrecht zur Flussrichtung des Strömungskanals angeordnet sind. Die Umfangswand besteht aus einem elastischen bzw. nachgebenden Material. Wirkt eine Druck- oder Zugkraft auf ein Kraftübertragungselement ein, so ist dieses auf diese Weise senkrecht zur Flussrichtung des Strömungskanals verschiebbar. Somit sind das erste und das zweite Kraftübertragungselement, oder das Kraftübertragungselement und das Fixierelement, wenn eine Druck- oder Zugkraft auf ein Kraftübertragungselement einwirkt, senkrecht zur Flussrichtung des Strömungskanals gegeneinander verschiebbar. Die Umfangswand, die den Strömungskanal umschließt, weist im zentralen Schließbereich einen Querschnitt auf, der von einem Kreis verschieden ist. Dabei umschließt die Umfangswand des Ventilkörpers im Querschnitt eine Fläche des Strömungskanals, die zumindest im Wesentlichen über den gesamten Ventilkörper konstant ist. Dadurch ist die mittlere Strömungsgeschwindigkeit im Strömungskanal an allen Positionen entlang des Ventilkörpers zumindest im Wesentlichen einheitlich bzw. konstant.

In typischen Ausführungsformen liegt das Quetschventil in einem offenen Zustand vor, solange keine Druck- oder Zugkraft auf ein oder mehrere Kraftübertragungselemente einwirkt. Bei Einwirkung einer Druckkraft auf ein oder mehrere Kraftübertragungselemente ist das Quetschventil in einen geschlossenen Zustand überführbar. In diesem geschlossenen Zustand kontaktieren sich an der Position der Umfangswand, an der die Kraftübertragungselemente mit dieser verbunden sind, im Querschnitt Innenflächen von linearen Abschnitten der Umfangswand so vollständig, dass in diesem Querschnitt, also an der Position, an der die Kraftübertragungselemente mit der Umfangswand verbunden sind, der Strömungskanal vollständig verschlossen ist.

In einigen Ausführungsformen des Quetschventils hat die Umfangswand, die den Strömungskanal umschließt, im zentralen Schließbereich einen Querschnitt, der von ovaler Form ist. In einigen Ausführungsformen liegt das Quetschventil in einem offenen Zustand vor, in dem die Umfangswand, die den Strömungskanal umschließt, im zentralen Schließbereich einen Querschnitt hat, der von ovaler Form ist.

In einigen Ausführungsformen des Quetschventils weist die Umfangswand an der Position des zentralen Schließbereichs, an der die Kraftübertragungselemente oder das Kraftübertragungselement und das Fixierelement mit der Umfangswand verbunden sind, einen Querschnitt auf, der zwei Abschnitte enthält, die zumindest im Wesentlichen zueinander passgenaue Innenflächen definieren, Diese zumindest im Wesentlichen zueinander passgenaue Innenflächen sind bei Einwirkung einer Druckkraft auf ein Kraftübertragungselement flächig miteinander kontaktierbar.

In einigen Ausführungsformen des Quetschventils weist die Umfangswand an der Position des zentralen Schließbereichs, an der die Kraftübertragungselemente oder das Kraftübertragungselement und das Fixierelement mit der Umfangswand verbunden sind, die den Strömungskanal umschließt, einen Querschnitt auf, der eine Mehrzahl an linearen Abschnitten enthält. Ein entsprechender linearer Abschnitt im Querschnitt der Umfangswand kann ein Bereich sein, in dem ein Kraftübertragungselement oder ein Fixierelement mit der Umfangswand verbunden ist. In einigen Ausführungsformen grenzen zwei lineare Abschnitte beidseitig an einen Punkt im Querschnitt der Umfangswand an, an dem ein Kraftübertragungselement oder ein Fixierelement mit der Umfangswand verbunden ist.

In einigen Ausführungsformen weist das Quetschventil einen Ventilkörper und ein Paar Kraftübertragungselemente auf. Der Ventilkörper weist wie bereits angegeben nur einen Strömungskanal auf, der von einer Umfangswand umschlossen ist. Der Strömungskanal des Ventilkörpers weist ein erstes Ende und ein zweites Ende auf. Am ersten Ende befindet sich die Eingangsöffnung. Die Eingangsöffnung kann wie bereits angegeben für den Anschluss eines Verbindungsglieds ausgelegt sein. Die Eingangsöffnung kann auch an ein Verbindungselement angrenzen. Das Verbindungsglied bzw. das Verbindungselement kann beispielsweise zum Anschließen eines Rohrs ausgelegt sein. Am zweiten Ende befindet sich die Ausgangsöffnung. Die Ausgangsöffnung kann für den Anschluss eines Verbindungsglieds ausgelegt sein. Die Ausgangsöffnung kann auch an ein Verbindungselement angrenzen. Das Verbindungsglied bzw. das Verbindungselement kann beispielsweise zum Anschließen eines Rohrs ausgelegt sein. Das Paar Kraftübertragungselemente ist mit der Umfangswand des Strömungskanals in einem zentralen Schließbereich verbunden. Dieser zentrale Schließbereich ist zwischen Eingangsöffnung und Ausgangsöffnung angeordnet. Das Paar Kraftübertragungselemente ist mit der Umfangswand so verbunden, dass die Kraftübertragungselemente zumindest im Wesentlichen senkrecht zur Flussrichtung des Strömungskanals angeordnet sind. Die Umfangswand besteht aus einem elastischen bzw. nachgebenden, z.B. flexiblen Material. Wirkt eine Druck- oder Zugkraft auf die Kraftübertragungselemente ein, so sind letztere auf diese Weise senkrecht zur Flussrichtung des Strömungskanals gegeneinander verschiebbar. Dabei können Kraftübertragungselemente entlang eines linearen Weges gegeneinander verschiebbar sein. Die Umfangswand, die den Strömungskanal umschließt, weist im zentralen Schließbereich einen Querschnitt auf, der von einem Kreis verschieden ist. Dabei umschließt die Umfangswand in diesem Querschnitt eine Fläche des Strömungskanals, die zumindest im Wesentlichen nicht nur über den gesamten zentralen Schließbereich, sondern über den gesamten Ventilkörper konstant ist, s.o.. An der Position des zentralen Schließbereichs, an der die Kraftübertragungselemente mit der Umfangswand verbunden sind, die den Strömungskanal umschließt, weist die Umfangswand einen Querschnitt auf, der eine Mehrzahl an linearen Abschnitten enthält. Ein entsprechender linearer Abschnitt im Querschnitt der Umfangswand ist entweder ein Bereich, in dem ein Kraftübertragungselement mit der Umfangswand verbunden ist, oder es grenzen zwei lineare Abschnitte beidseitig an einen Punkt im Querschnitt der Umfangswand an, an dem ein Kraftübertragungselement mit der Umfangswand verbunden ist.

In einigen Ausführungsformen des Quetschventils enthält der Querschnitt der Umfangswand an der Position, an der die Kraftübertragungselemente oder das Kraftübertragungselement und das Fixierelement mit der Umfangswand verbunden sind, zwei lineare Abschnitte, die einander gegenüberliegen. In einigen Ausführungsformen enthält der Querschnitt der Umfangswand an der Position, an der die Kraftübertragungselemente mit der Umfangswand verbunden sind, eine Mehrzahl an linearen Abschnitten, von denen wenigstens zwei in einem Winkel zueinander angeordnet sind.

In einigen Ausführungsformen des Quetschventils weist der Querschnitt der Umfangswand an der Position, an der die Kraftübertragungselemente oder das Kraftübertragungselement und das Fixierelement mit der Umfangswand verbunden sind, eine zentrale Spiegelebene auf. Eine solche zentrale Spiegelebene kann beispielsweise horizontal oder vertikal ausgerichtet sein. In einigen derartigen Ausführungsformen können ein oder mehrere Kraftübertragungselemente bei Einwirkung einer Druck- oder Zugkraft auf selbige in die Richtung zur zentralen Spiegelebene hin oder in die Richtung von der zentralen Spiegelebene weg verschiebbar sein. Beispielsweise können in Ausführungsformen mit einer Mehrzahl an Kraftübertragungselementen einige Kraftübertragungselemente in die Richtung zur zentralen Spiegelebene hin oder in die Richtung von der zentralen Spiegelebene weg verschiebbar sein. In einigen derartigen Ausführungsformen können auch alle Kraftübertragungselemente in die Richtung zur zentralen Spiegelebene hin oder in die Richtung von der zentralen Spiegelebene weg verschiebbar sein.

In einigen Ausführungsformen des Quetschventils weist der Querschnitt der Umfangswand an der Position, an der die Kraftübertragungselemente - oder das Kraftübertragungselement und das Fixierelement - mit der Umfangswand verbunden sind, eine Symmetrieachse auf. Diese Symmetrieachse ist dadurch definiert ist, dass der betreffende Querschnitt der Umfangswand an der Position, an der die Kraftübertragungselemente - oder das Kraftübertragungselement und das Fixierelement - mit der Umfangswand verbunden sind, durch eine gedankliche Drehung um einen Winkel von weniger als 360° um die Symmetrieachse in eine von der Ausgangslage nicht unterscheidbare Anordnung überführbar ist. In einigen derartigen Ausführungsformen kann ein Kraftübertragungselement bei Einwirkung einer Druck- oder Zugkraft auf selbiges parallel zur Spiegelebene, oder in der Spiegelebene, verschiebbar sein. In einigen Ausführungsformen können Kraftübertragungselemente einer Mehrzahl an Kraftübertragungselementen bei Einwirkung einer Druck- oder Zugkraft parallel zur Spiegelebene oder in der Spiegelebene gegeneinander verschiebbar sein. In einigen Ausführungsformen können ein oder mehrere Kraftübertragungselemente bei Einwirkung einer Druck- oder Zugkraft auf selbige in die Richtung zur Symmetrieachse hin oder in die Richtung von der Symmetrieachse weg verschiebbar sein. Beispielsweise können in Ausführungsformen mit einer Mehrzahl an Kraftübertragungselementen einige Kraftübertragungselemente in die Richtung zur Symmetrieachse hin oder in die Richtung von der Symmetrieachse weg verschiebbar sein. In einigen derartigen Ausführungsformen können auch alle Kraftübertragungselemente in die Richtung zur Symmetrieachse hin oder in die Richtung von der Symmetrieachse weg verschiebbar sein.

In einigen Ausführungsformen des Quetschventils weist der Querschnitt der Umfangswand an der Position, an der die Kraftübertragungselemente oder das Kraftübertragungselement und das Fixierelement mit der Umfangswand verbunden sind, sowohl eine zentrale Spiegelebene als auch eine Symmetrieachse auf.

In einigen Ausführungsformen des Quetschventils, in denen der Querschnitt der Umfangswand an der Position, an der die Kraftübertragungselemente oder das Kraftübertragungselement und das Fixierelement mit der Umfangswand verbunden sind, eine zentrale Spiegelebene aufweist, sind ein erstes und ein zweites Kraftübertragungselement in Bezug auf die Spiegelebene gegeneinander verschiebbar. In solchen Ausführungsformen ist die Umfangswand im zentralen Schließbereich so verformbar, dass sich bei einem Verschieben der Kraftübertragungselemente gegeneinander der Abstand selbiger zueinander verändert. In einigen Ausführungsformen, in denen der Querschnitt der Umfangswand an der Position, an der die Kraftübertragungselemente oder das Kraftübertragungselement und das Fixierelement mit der Umfangswand verbunden sind, eine zentrale Spiegelebene aufweist, ist ein Kraftübertragungselement in Bezug auf die Spiegelebene gegenüber dem Fixierelement verschiebbar. In solchen Ausführungsformen ist die Umfangswand im zentralen Schließbereich so verformbar, dass sich bei einem Verschieben des Kraftübertragungselements gegenüber dem Fixierelement der Abstand zwischen dem Kraftübertragungselement und dem Fixierelement verändert.

In einigen Ausführungsformen des Quetschventils kann die Umfangswand im Querschnitt an der Position, an der die Kraftübertragungselemente oder das Kraftübertragungselement und das Fixierelement mit der Umfangswand verbunden sind, eine Mehrzahl an Punkten verminderter Wandstärke aufweisen. In einigen Ausführungsformen kann die Umfangswand im Querschnitt an der Position, an der die Kraftübertragungselemente oder das Kraftübertragungselement und das Fixierelement mit der Umfangswand verbunden sind, eine Mehrzahl an Segmenten verminderter Wandstärke aufweisen.

In einigen Ausführungsformen des Quetschventils weist die Umfangswand des Strömungskanals eine oder mehrere in einem Winkel zum Querschnitt verlaufende Verdickungen, beispielsweise in Form dünner elastisch verformbarer Flächenelemente auf. In einigen Ausführungsformen weist die Umfangswand eine oder mehrere in einem Winkel zum Querschnitt verlaufende Einbuchtungen auf. In einigen Ausführungsformen weist die Umfangswand sowohl eine oder mehrere in einem Winkel zum Querschnitt verlaufende Verdickungen als auch eine oder mehrere in einem Winkel zum Querschnitt verlaufende Einbuchtungen auf. Entsprechende Verdickungen bzw. Einbuchtungen können bei einer Krafteinwirkung über das oder die Kraftübertragungselement(e) eine möglichst lineare Verformung im Querschnitt des zentralen Schließbereichs der Umfangswand ermöglichen. So können solche Verdickungen bzw. Einbuchtungen eine möglichst lineare Verformung im Querschnitt der Umfangswand an der Position ermöglichen, an der die Kraftübertragungselemente oder das Kraftübertragungselement und das Fixierelement mit der Umfangswand verbunden sind.

In einigen Ausführungsformen des Quetschventils kann ein Kraftübertragungselement durch ein Kopplungselement für eine Kraft übertragende Vorrichtung definiert sein. In einigen Ausführungsformen des Quetschventils kann ein Kraftübertragungselement durch einen Stempel definiert sein.

In einigen Ausführungsformen des Quetschventils kann ein Kraftübertragungselement über eine formschlüssige oder eine kraftschlüssige Verbindung an eine Kraft übertragende Vorrichtung koppelbar sein. In einigen Ausführungsformen des Quetschventils kann ein Kraftübertragungselement über eine formschlüssige oder eine kraftschlüssige Verbindung an eine Kraft übertragende Vorrichtung fixierbar sein. In einigen Ausführungsformen des Quetschventils kann jedes der vorhandenen Kraftübertragungselemente unabhängig voneinander über eine formschlüssige oder eine kraftschlüssige Verbindung an eine Kraft übertragende Vorrichtung koppelbar und/oder fixierbar sein oder durch einen Stempel definiert werden.

In einigen Ausführungsformen des Quetschventils kann ein Kraftübertragungselement mit einem linearen Abschnitt des Querschnitts der Umfangswand verbunden sein. In einigen Ausführungsformen kann eine Mehrzahl an Kraftübertragungselementen jeweils unabhängig voneinander mit einem linearen Abschnitt des Querschnitts der Umfangswand verbunden sein. In einigen Ausführungsformen können Kraftübertragungselemente jeweils mit einem Abschnitt des Querschnitts der Umfangswand verbunden sein, der eine Ecke selbiger definiert, beispielsweise die Ecke eines Polygons. Ein solcher Abschnitt des Querschnitts der Umfangswand kann eine Ecke eines n-eckigen Segments definieren. Dabei ist n eine Zahl von 3 bis 12, beispielsweise eine Zahl von 3 bis 8. Es kann n auch eine Zahl von 3 bis 7 sein.

In einigen Ausführungsformen des Quetschventils kann der Querschnitt der Umfangswand an der Position, an der die Kraftübertragungselemente oder das Kraftübertragungselement und das Fixierelement mit der Umfangswand verbunden sind, wenigstens ein halbkreisförmiges, ein halbellipsenförmiges, ein parabelförmiges oder ein Polygon-förmiges Segment aufweisen. In einigen Ausführungsformen kann ein Kraftübertragungselement mit der Umfangswand an einem halbkreisförmigen, einem halbellipsenförmigen, einem parabelförmigen oder einem Polygon-förmigen Segment verbunden sein. In einigen Ausführungsformen kann ein Kraftübertragungselement mit der Umfangswand an einer Stelle des Querschnitts verbunden sein, die von einem halbkreisförmigen, von einem halbellipsenförmigen, von einem parabelförmigen und/oder von einem Polygon-förmigen Segment verschieden ist. In einigen Ausführungsformen kann ein Fixierelement mit der Umfangswand an einem halbkreisförmigen, einem halbellipsenförmigen, einem parabelförmigen oder einem Polygon-förmigen Segment verbunden sein. In einigen Ausführungsformen kann ein Fixierelement mit der Umfangswand an einer Stelle des Querschnitts verbunden sein, die von einem halbkreisförmigen, von einem halbellipsenförmigen, von einem parabelförmigen und/oder von einem Polygon-förmigen Segment verschieden ist.

Wie bereits vorangehend angegeben, definiert in einigen Ausführungsformen des Quetschventils der Strömungskanal eine Längsachse des zentralen Schließbereichs. Im Querschnitt des zentralen Schließbereichs definiert diese Längsachse dementsprechend eine Symmetrieachse. In solchen Ausführungsformen kann die Umfangswand im Querschnitt an der Position, an der die Kraftübertragungselemente oder das Kraftübertragungselement und das Fixierelement mit der Umfangswand verbunden sind, eine Mehrzahl an Punkten verminderter Wandstärke aufweisen. Dabei können sich zwei dieser Mehrzahl an Punkten in Bezug auf die Symmetrieachse gegenüberliegen.

Wie bereits vorangehend angegeben, kann die Umfangswand an der Position, an der die Kraftübertragungselemente oder das Kraftübertragungselement und das Fixierelement mit dieser verbunden sind, einen Querschnitt aufweisen, der eine zentrale Spiegelebene hat. In solchen Ausführungsformen können ein oder mehrere Kraftübertragungselemente dazu ausgelegt sein, eine Krafteinwirkung parallel zur Spiegelebene oder in der Spiegelebene des Strömungskanals zu vermitteln. Dadurch kann die Umfangswand auf eine Weise verformbar sein, dass sich ihre Ausdehnung senkrecht zur Spiegelebene verändert.

In einigen Ausführungsformen enthält ein Quetschventil gemäß dem ersten Aspekt weiterhin ein Verbindungsglied, das an der Eingangsöffnung und/oder der Ausgangsöffnung angeordnet ist.

Gemäß einem zweiten Aspekt wird ein Verfahren zum Kontrollieren des Fluidflusses durch eine Röhre oder durch einen Schlauch bereitgestellt. Die Röhre bzw. der Schlauch enthält ein Quetschventil gemäß dem ersten Aspekt. Zum Verfahren zählt es, im offenen Zustand des Quetschventils eine Druckkraft senkrecht zur Flussrichtung des Strömungskanals auf das Paar Kraftübertragungselemente einwirken zu lassen. Durch das Einwirken der Druckkraft verringert sich der Abstand der Kraftübertragungselemente zueinander, wodurch sich die Form des Querschnitts der Umfangswand an der Position verändert, an der die Kraftübertragungselemente oder das Kraftübertragungselement und das Fixierelement mit der Umfangswand verbunden sind. Dadurch verringert sich in dieser Position im Querschnitt zumindest die von der Umfangswand umschlossene Fläche des Strömungskanals. Zum Verfahren zählt es auch, im geschlossenen Zustand des Quetschventils eine senkrecht zur Flussrichtung des Strömungskanals auf das Paar Kraftübertragungselemente einwirkende Druckkraft zu verringern und/oder eine Zugkraft senkrecht zur Flussrichtung des Strömungskanals auf das Paar Kraftübertragungselemente einwirken zu lassen. Durch die verringerte Druckkraft vergrößert sich der Abstand der Kraftübertragungselemente voneinander und es verändert sich die Form des Querschnitts der Umfangswand an der Position, an der die Kraftübertragungselemente oder das Kraftübertragungselement und das Fixierelement mit der Umfangswand verbunden sind. Dadurch entfernen sich im Querschnitt der Umfangswand an der Position, an der die Kraftübertragungselemente oder das Kraftübertragungselement und das Fixierelement mit der Umfangswand verbunden sind, miteinander in Kontakt stehende Innenflächen der Umfangswand voneinander. Diese Innenflächen der Umfangswand entfernen sich zumindest so weit voneinander, dass der Strömungskanal eine von Null verschiedene Fläche einnimmt. Der Strömungskanal wird damit freigegeben.

In einigen Ausführungsformen wird im Verfahren gemäß dem zweiten Aspekt im geschlossenen Zustand des Quetschventils eine zuvor auf ein oder mehrere Kraftübertragungselement(e) einwirkende Druckkraft so weit verringert oder eine so starke Zugkraft senkrecht zur Flussrichtung des Strömungskanals auf ein oder mehrere Kraftübertragungselement(e) einwirken gelassen, dass sich der Abstand der Kraftübertragungselemente oder der Abstand zwischen dem Kraftübertragungselement und dem Fixierelement so weit vergrößert, dass das Quetschventil vollständig in seinen offenen Zustand überführt wird.

In einigen Ausführungsformen wird im Verfahren gemäß dem zweiten Aspekt im geschlossenen Zustand des Quetschventils eine zuvor auf ein oder mehrere Kraftübertragungselement(e) einwirkende Druckkraft beendet. Dadurch kann beispielsweise eine senkrecht zur Flussrichtung des Strömungskanals auf ein erstes und ein zweites Kraftübertragungselement einwirkende Druckkraft beendet werden. Dadurch vergrößert sich der Abstand der Kraftübertragungselemente zueinander oder der Abstand zwischen dem Kraftübertragungselement und dem Fixierelement und es treten die zuvor beschriebenen Folgen ein.

In einigen Ausführungsformen wird im Verfahren gemäß dem zweiten Aspekt im offenen Zustand des Quetschventils eine senkrecht zur Flussrichtung des Strömungskanals auf ein Kraftübertragungselement oder auf ein erstes und ein zweites Kraftübertragungselement einwirkende Druckkraft verstärkt. Dadurch verringert sich der Abstand der Kraftübertragungselemente zueinander oder der Abstand zwischen dem Kraftübertragungselement und dem Fixierelement und es treten die vorangehend beschriebenen Folgen ein.

### KURZE BESCHREIBUNG DER ZEICHNUNGEN

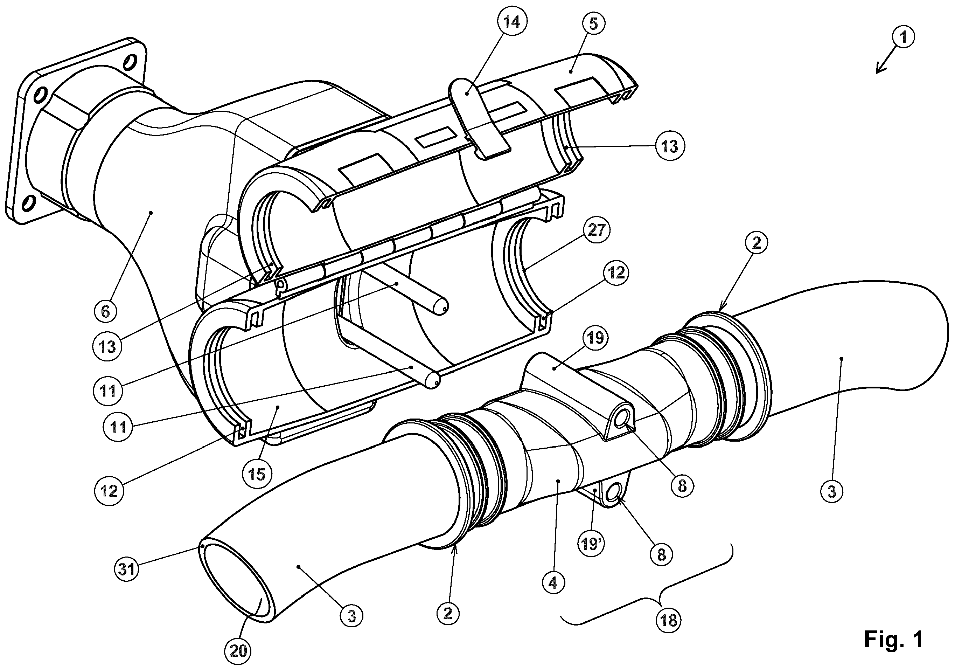

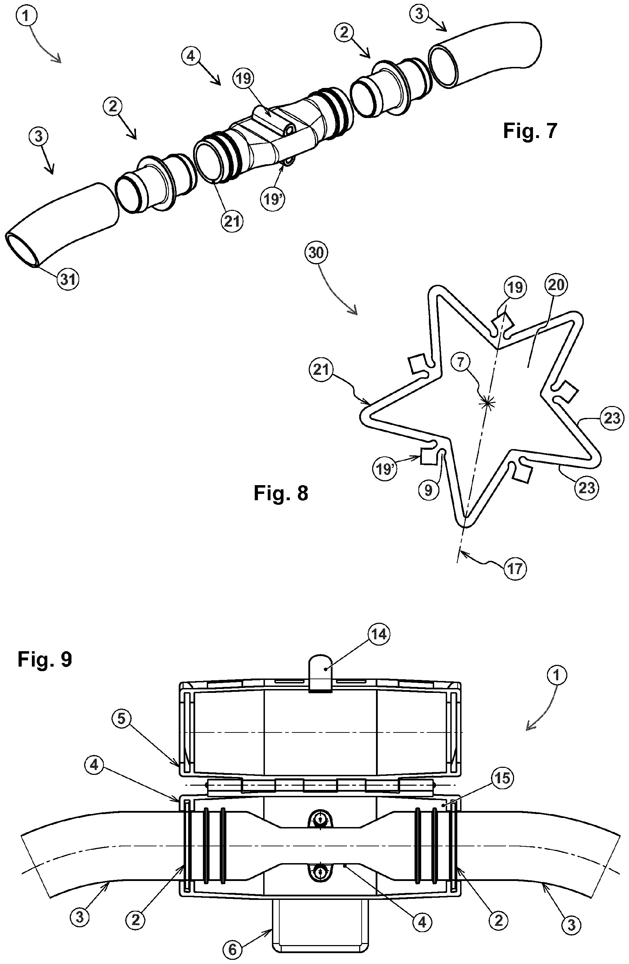

In den Figuren 1 bis 7 und 9 bis 14 sind Konstruktionszeichnungen widergegeben, so dass sich für die gezeigten beispielhaften Ausführungsformen die Verhältnisse von Dimensionen zueinander den Figuren entnehmen lassen. Auch die in Fig. 8 gezeigten Dimensionen entsprechend im Wesentlichen den Verhältnissen einer tatsächlichen Ausführungsform.
**Fig. 1** zeigt ein hier offenbartes Quetschventil (1) mit einem Ventilkörper (4), Verbindungsgliedern (2) in Form von Schlauchadaptern mit angeschlossenen Schläuchen (3) und einem Gehäuse (5, 15). Im Gehäuse (5, 15) sind Kraft übertragende Mitnehmer (11) angeordnet, mit denen Bohrungen (8) enthaltende Kraftübertragungselemente (19, 19') gekoppelt werden können, die in einem zentralen Schließbereich (18) angeordnet sind. Das Gehäuse enthält eine Verriegelung (14), ist an eine Gehäuseschließvorrichtung (6) gekoppelt und enthält Freimachungen (12, 13) zur Fixierung der Verbindungsglieder (2). Die Schläuche (3) haben eine Umfangswand (31) und umschließen ebenso wie die Verbindungsglieder (2) und der Ventilkörper (4) einen Strömungskanal (20).

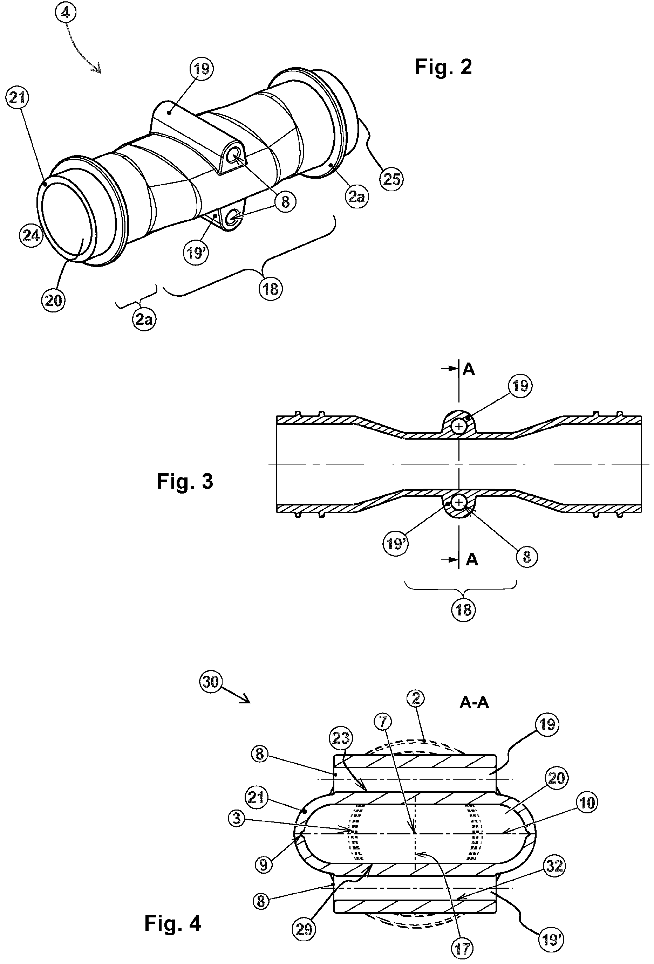

**Fig. 2** zeigt perspektivisch eine Ausführungsform eines Ventilkörpers (4) eines hier offenbarten Quetschventils, das eine Eingangsöffnung (24) mit daran angrenzendem Verbindungselement (2a) und eine Ausgangsöffnung (25) mit daran angrenzendem Verbindungselement (2a) enthält. Im zentralen Schließbereich (18) sind die Bohrungen (8) enthaltenden Kraftübertragungselemente (19, 19') mit der Umfangswand (21) verbunden, die den Strömungskanal (20) umgibt.
**Fig. 3** zeigt im Längsschnitt eine Ausführungsform eines Ventilkörpers (4) eines hier offenbarten Quetschventils, das für den Anschluss von Verbindungsgliedern ausgelegt ist. Im zentralen Schließbereich (18) ist an der Position der Bohrungen (8) enthaltenden Kraftübertragungselemente (19, 19') eine virtuelle Ebene A-A angedeutet.
**Fig. 4** zeigt einen Querschnitt (30) des in Fig. 2 gezeigten Ventilkörpers (4) in der virtuelle Ebene A-A, die sich durch die Bohrungen (8) mit Innenwänden (32) enthaltenden Kraftübertragungselemente (19, 19') erstreckt. Durch unterbrochene Linien angedeutet sind der Umriss des dahinter befindlichen Verbindungsglieds (2) sowie der Umriss der Umfangswand des sich daran anschließenden Schlauchs (3). Der Querschnitt enthält an dieser Position eine vertikal verlaufende Spiegelebene (17), eine horizontal verlaufende Spiegelebene (10) und eine zentrale Symmetrieachse (7). Im Querschnitt enthält die Umfangswand (21) des Strömungskanals (20) zwei einander gegenüberliegende lineare Abschnitte (23) mit linearen Innenflächen (29) der Wand, sowie zwei Punkte verminderter Wandstärke (9).

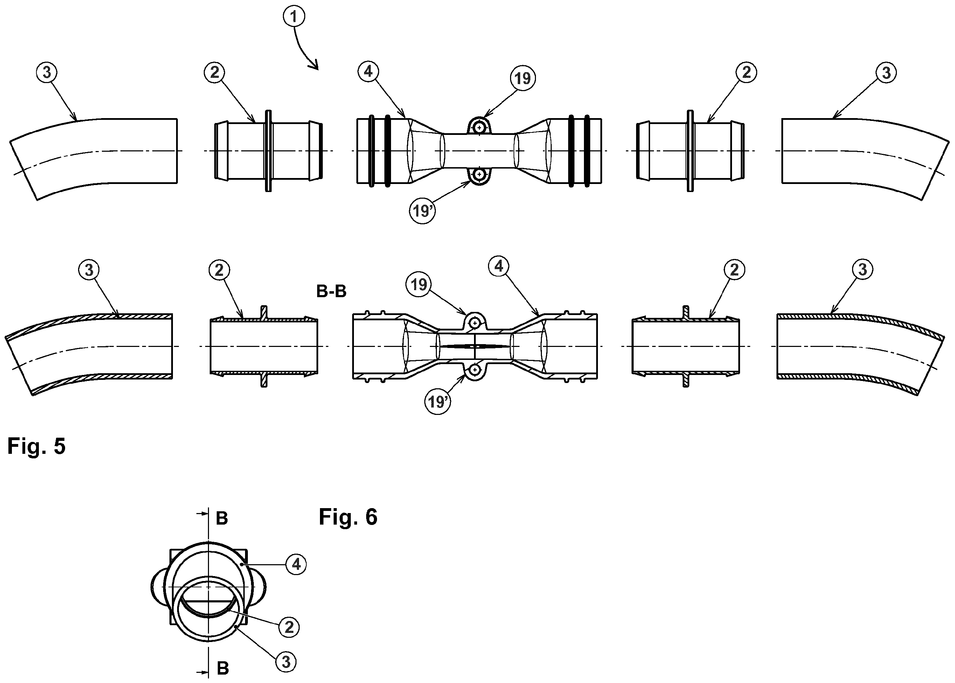

**Fig. 5** ist eine Explosionsdarstellung von Bestandteilen eines hier offenbarten Quetschventils (1) in Form eines Ventilkörpers (4) mit Kraftübertragungselementen (19) und Verbindungsgliedern (2). Ebenfalls dargestellt sind anzuschließende Schläuche (3). An der Verbindung eines Verbindungsgliedes (2) und des Ventilkörpers (4) ist eine virtuelle Ebene B-B angedeutet.
**Fig. 6** zeigt schematisch die Umrisse von Ventilkörper (4), Verbindungsglied (2) und dem angedeuteten Ende von Schlauch (3) relativ zur virtuellen Ebene B-B in Fig. 5.
**Fig. 7** zeigt in perspektivischer Explosionsdarstellung den Ventilkörper (4) mit Kraftübertragungselementen (19, 19') und die Verbindungsglieder (2) sowie anzuschließende Schläuche der in Fig. 5 gezeigten Ausführungsform eines hier offenbarten Quetschventils (1).
**Fig. 8** zeigt einen Querschnitt (30) einer Ausführungsform eines hier offenbarten Ventilkörpers (4) an der Position, an der Kraftübertragungselemente (19, 19') mit der Umfangswand (21) verbunden sind. Die Umfangswand hat im Querschnitt die Form eines Fünfecks und enthält eine Spiegelebene (17) und eine zentrale Symmetrieachse (7). Punkte verminderter Wandstärke (9) grenzen an die Kraftübertragungselemente (19, 19') und an lineare Abschnitte (23) der Umfangswand (21) an.
**Fig. 9** zeigt im Längsschnitt die in Fig. 1 gezeigte Ausführungsform des Quetschventils (1) mit Ventilkörper (4), Verbindungsgliedern (2) und angeschlossenen Schläuchen (3), sowie dem Gehäuse (5, 15). Das Gehäuse enthält eine Verriegelung (14) und ist an eine Gehäuseschließvorrichtung (6) gekoppelt.

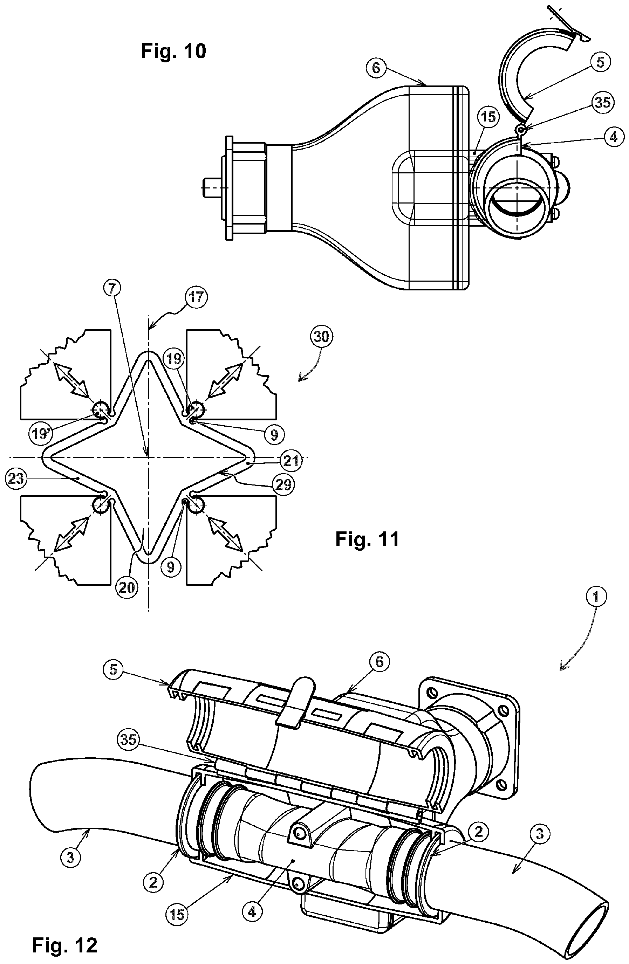

**Fig. 10** zeigt in der Seitenansicht eine Gehäuseschließvorrichtung (6) mit daran gekoppeltem Ventilkörper (4) und geöffnetem Gehäuse (5, 15). Es ist deutlich erkennbar, dass ein Teil des Gehäuses (15) an der Gehäuseschließvorrichtung (6) fixiert ist, während ein Teil des Gehäuses (5) über ein Scharnier (35) beweglich mit dem fixierten Gehäuseteil (15) verbunden ist.
**Fig. 11** symbolisiert an Hand des Querschnitts (30) einer Ausführungsform eines hier offenbarten Ventilkörpers (4) an der Position, an der Kraftübertragungselemente (19) mit der Umfangswand (21) verbunden sind, das Einwirken einer Druck- oder Zugkraft, symbolisiert durch Doppelpfeile. Die jeweilige Kraft wirkt auf die Kraftübertragungselemente (19, 19'), typischerweise in oder entgegen der Richtung der zentralen Symmetrieachse (7). Ändert sich die Position der Kraftübertragungselemente (19, 19'), so verschieben sich die Ausrichtungen der linearen Abschnitte (23) der Umfangswand (21), inklusive ihrer Innenflächen (29), indem sich die jeweiligen Winkel an den Kraftübertragungselementen (19, 19'), assistiert durch die Punkte verminderter Wandstärke (9), verändern. Im Ergebnis kann sich dadurch die Fläche ändern, die im Querschnitt (30) vom Strömungskanal (20) eingenommen wird.
**Fig. 12** zeigt in perspektivischer Ansicht das in Fig. 1 gezeigte Quetschventil (1), wobei die miteinander verbundenen Elemente Ventilkörper (4), Verbindungsglieder (2) und angeschlossene Schläuche (3) im Teil des Gehäuses (15) angeordnet sind, mit dem die Gehäuseschließvorrichtung (6) verbunden ist. Das Gehäuse ist geöffnet, so dass ein über ein Scharnier (35) beweglicher Teil (5) des Gehäuses nicht mit den Verbindungsgliedern (2) in Kontakt ist.

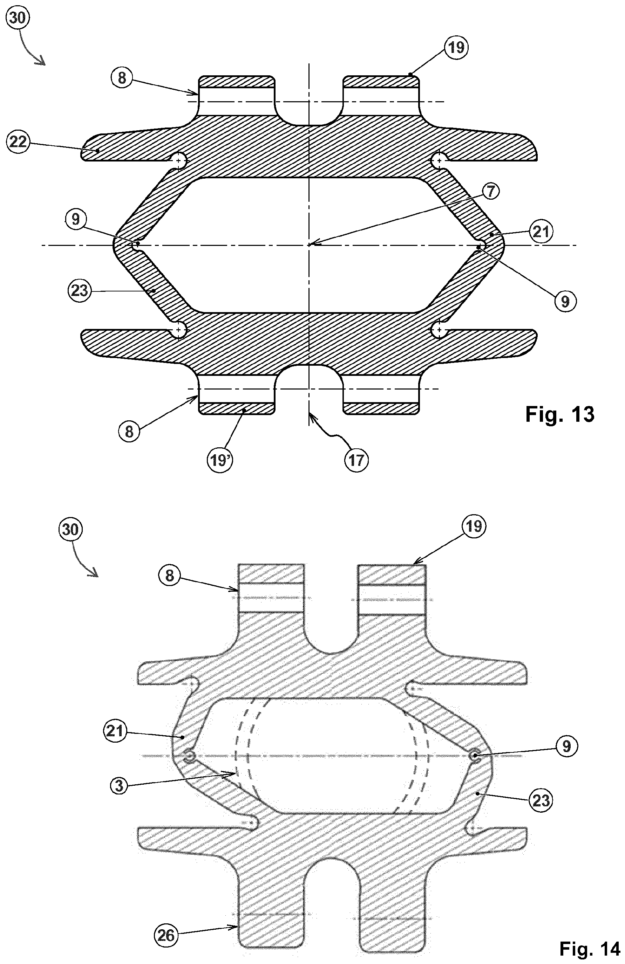

**Fig. 13** zeigt im Querschnitt (30) an der Position, an der Kraftübertragungselemente (19, 19') mit der Umfangswand (21) verbunden sind, eine weitere Ausführungsform eines Ventilkörpers. Der Querschnitt hat ebenfalls eine zentrale Symmetrieachse (7) und eine Spiegelebene (17). Diese Ausführungsform enthält Bohrungen (8) enthaltende Kraftübertragungselemente (19, 19') sowie Flexibilität ermöglichende Punkte verminderter Wandstärke (9), die an lineare Abschnitte (23) der Umfangswand (21) angrenzen. Darüber hinaus ist die Umfangswand (21) mit Vorsprüngen (22) versehen.
**Fig. 14** zeigt eine weitere Ausführungsform eines Ventilkörpers, und zwar im Querschnitt (30) an der Position, an ein Kraftübertragungselement (19) und ein Fixierelement (26) mit der Umfangswand (21) verbunden sind. Lineare Abschnitte (23) der Umfangswand (21) von unterschiedlicher Länge werden bei Einwirkung auf das eine Bohrung (8) enthaltende Kraftübertragungselement (19) gegeneinander verschoben, während die Position des Fixierelements (26) unverändert bleibt. Dadurch verändert sich die relative Position in Bezug auf den durch unterbrochene Linien angedeuteten Schlauch (3). Punkte verminderter Wandstärke (9) erleichtern das Verändern der Form des Querschnitts (30).

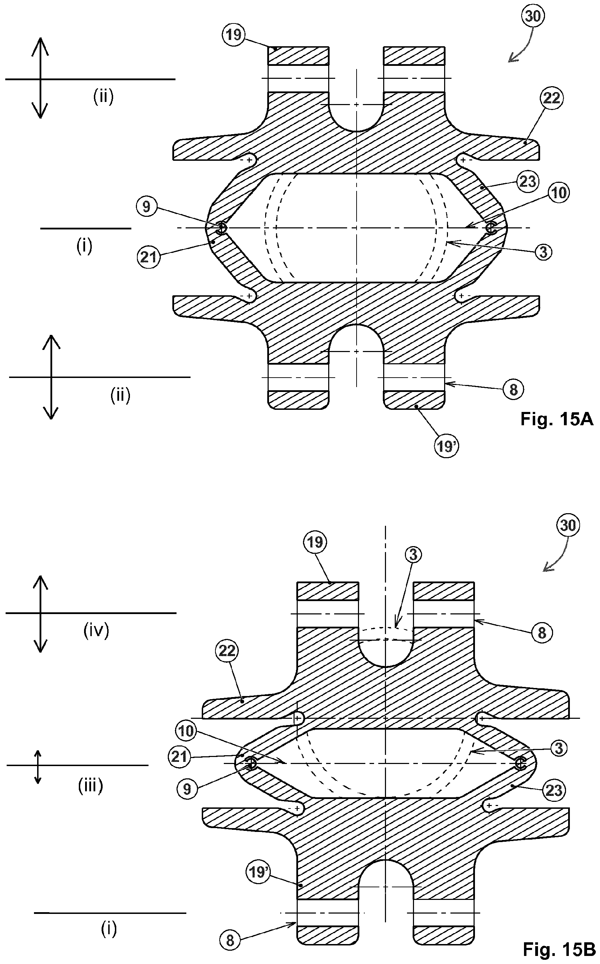

**Fig. 15** veranschaulicht im Querschnitt (30) an der Position, an der Kraftübertragungselemente (19, 19') mit der Umfangswand (21) verbunden sind, das Einwirken einer gleich großen Druck- oder Zugkraft auf zwei einander gegenüber liegende Kraftübertragungselemente (19, 19') (A) und das Einwirken einer Kraft auf nur eines (19) von zwei einander gegenüber liegenden Kraftübertragungselementen (19, 19') (**B**). In **Fig. 15** **A** verbleibt eine horizontale Spiegelebene (10), die im gleichen Abstand zwischen den Kraftübertragungselementen (19, 19') angeordnet ist, in Bezug auf einen durch unterbrochene Linien angedeuteten Schlauch (3) an unveränderter Position (i). Es erfolgt eine Bewegung der Kraftübertragungselemente (19, 19') entlang eines linearen Wegs um den gleichen Betrag (ii). Auch die Vorsprünge (22) bewegen sich um den gleichen Betrag aufeinander zu oder voneinander weg. In **Fig. 15** **B** verschiebt sich die horizontale Spiegelebene (10) in Bezug auf einen Schlauch (3) entlang eines linearen Wegs (iii). Eines (19') der beiden einander gegenüber liegenden Kraftübertragungselemente (19, 19') verbleibt bei Einwirken einer Kraft auf das andere Kraftübertragungselement (19) in Bezug auf den Schlauch (3) an unveränderter Position (i). Das andere Kraftübertragungselement (19) verschiebt sich in Bezug auf den Schlauch (3) entlang eines linearen Wegs (iv) um einen größeren Betrag als die horizontale Spiegelebene. Die Vorsprünge (22) oberhalb der horizontalen Spiegelebene (10) verschieben sich in Bezug auf den Schlauch (3) um einen stärkeren Betrag als die Vorsprünge (22) unterhalb der horizontalen Spiegelebene.

### AUSFÜHRLICHE BESCHREIBUNG

Soweit nicht anders angegeben, haben die folgenden Begriffe und Ausdrücke wenn sie in diesem Dokument, inklusive Beschreibung und Patentansprüchen, verwendet werden, die im Folgenden angegebenen Bedeutungen.

Der Ausdruck "bestehend aus" wie in diesem Dokument verwendet, bedeutet einschließend und begrenzt auf das, was auf den Begriff "bestehend aus" folgt. Der Begriff "bestehend aus", gibt somit an, dass aufgeführte Elemente erforderlich oder notwendig sind und dass keine weiteren Elemente vorhanden sein dürfen. Der Begriff "im Wesentlichen bestehend aus" wird dahingehend verstanden, dass er bedeutet, dass jedwede Elemente, die nach dem Ausdruck definiert sind, umfasst sind und dass weitere Elemente, beispielsweise in einer Probe oder einer Zusammensetzung zugegen sein können, die die Aktivität oder Wirkung, die für die betreffenden Elemente in diesem Dokument angegeben sind, nicht verändern, also sie nicht beeinträchtigen und nicht zu ihr beitragen. Anders gesagt gibt der Ausdruck "im Wesentlichen bestehend aus" an, dass die definierten Elemente notwendig oder erforderlich sind, dass aber weitere Elemente optional sind und zugegen sein können oder nicht, je nachdem, ob sie für die Wirkung oder Wirksamkeit der definierten Elemente von Belang sind oder nicht.

Das Wort "etwa" bezieht sich wenn hier verwendet auf einen Wert, der für einen bestimmten Wert, wie von einem Durchschnittsfachmann bestimmt, innerhalb eines akzeptablen Fehlerbereichs liegt. Dies wird teilweise davon abhängig sein, wie der jeweilige Wert ermittelt oder gemessen worden ist, d.h. von den Einschränkungen des Messsystems. "Etwa" kann beispielsweise innerhalb einer Standardabweichung von 1 oder mehr bedeuten, je nach Gebrauch im jeweiligen Gebiet. Der Begriff "etwa" wird auch verwendet um anzugeben, dass der Betrag oder Wert der bezeichnete Wert sein kann oder ein anderer Wert, der näherungsweise gleich ist. Der Begriff soll ausdrücken, dass ähnliche Werte gleichwertige Ergebnisse oder Wirkungen, wie in diesem Dokument offenbart, begünstigen. In diesem Zusammenhang kann "etwa" sich auf einen Bereich von bis zu 10 % über und/oder unter einem bestimmten Wert beziehen. In einigen Ausführungsformen bezieht "etwa" sich auf einen Bereich von bis zu 5 % über und/oder unter einem bestimmten Wert, wie etwa 2 % über und/oder unter einem bestimmten Wert. In einigen Ausführungsformen bezieht "etwa" sich auf einen Bereich von bis zu 1 % über und/oder unter einem bestimmten Wert. In einigen Ausführungsformen bezieht "etwa" sich auf einen Bereich von bis zu 0,5 % über und/oder unter einem bestimmten Wert. In einer Ausführungsform bezieht sich "etwa" auf einen Bereich von bis zu 0,1 % über und/oder unter einem bestimmten Wert.

Die Begriffe "oben", "unten", "vertikal" und "horizontal" beziehen sich auf eine Ausrichtung eines hier offenbarten Quetschventils als Ganzes wie es typischerweise bei seiner Verwendung in einem Verfahren zum Kontrollieren des Fluidflusses durch eine Röhre bzw. einen Schlauch gemäß dem unabhängigen Verfahrensanspruch auftritt. Die Ausrichtung des Ventilkörpers wird dabei typischerweise durch die Kopplung/Fixierung der Kraftübertragungselemente an Kraft übertragende Vorrichtungen und/oder ggf. durch die Ausrichtung des Stempels bestimmt. Die Figuren 4, 8, 11, 13 und 14 zeigen Ansichten eines Querschnitts eines Quetschventils, deren Ausrichtung die Begriffe "vertikal" und "horizontal" so definieren können, dass sie in der abgebildeten Form in der Horizontalen parallel zur Ebene des Meeresspiegels und in der Vertikalen parallel zur Ebene der Wirkung der Gravitation ausgerichtet sind.

Der Konjunktionalausdruck "und/oder" zwischen mehreren Elementen, wenn hier verwendet, wird als sowohl individuelle als auch kombinierte Optionen umfassend verstanden. Sind beispielsweise zwei Elemente durch "und/oder" verknüpft, betrifft eine erste Option den Einsatz des ersten Elements ohne das zweite Element. Eine zweite Option betrifft den Einsatz des zweiten Elements ohne das erste Element. Eine dritte Option betrifft den Einsatz des ersten und des zweiten Elements zusammen. Es wird verstanden, dass jede beliebige dieser Optionen unter die Bedeutung des Ausdrucks fällt und somit die Bedingungen des Begriffs "und/oder", wie in diesem Dokument verwendet, erfüllt.

Singularformen wie "eine", "ein", "der", "die" oder "das" schließen die Pluralform ein, wenn sie in diesem Dokument verwendet werden. So bezeichnet beispielsweise eine Bezugnahme auf "eine Zelle" sowohl eine individuelle Zelle als auch eine Mehrzahl an Zellen. In einigen Fällen wird explizit der Ausdruck "ein oder mehrere" verwendet, um im jeweiligen Fall daraufhinzuweisen, dass die Singularform die Pluralform mit umfasst. Derartige explizite Hinweise schränken die allgemeine Bedeutung der Singularform nicht ein. Falls nicht anders angegeben, werden die Begriffe "zumindest", "mindestens" und "wenigstens", wenn sie eine Abfolge von Elementen vorangehen, dahingehend verstanden, dass sie sich auf jedes dieser Elemente beziehen. Die Begriffe "zumindest ein", "mindestens ein(e)", "wenigstens einer" oder "wenigstens eine(r) von" schließen beispielsweise ein, zwei, drei, vier oder mehr Elemente ein.

Ein hier offenbartes Quetschventil enthält eine Eingangsöffnung und eine Ausgangsöffnung, die in der Regel an unterschiedlichen Enden des Quetschventils angeordnet sind. Die Ein- und Ausgangsöffnung ermöglichen den Fluss eines flüssigen oder gasförmigen Mediums durch einen Strömungskanal, der sich durch das Quetschventil erstreckt. Der Strömungskanal ist von einer umlaufenden Umfangswand umgeben. Diese Umfangswand kann über die gesamte Länge des Quetschventils aus einem einheitlichen Material gefertigt sein. In einigen Ausführungsformen kann die Umfangswand an unterschiedlichen Positionen entlang des Strömungskanals unterschiedliches Material enthalten.

Das Quetschventil enthält einen Ventilkörper, der ebenfalls eine Eingangsöffnung und eine Ausgangsöffnung enthält. Eingangsöffnung und Ausgangsöffnung des Ventilkörpers sind an unterschiedlichen Enden des Ventilkörpers angeordnet. Typischerweise befinden sich Eingangsöffnung und Ausgangsöffnung des Ventilkörpers auch an unterschiedlichen Enden des Quetschventils. Der Strömungskanal, der sich auch durch den zentralen Schließbereich erstreckt (vgl. unten), kann eine Längsachse des Quetschventils definieren. Der Strömungskanal kann an der Eingangsöffnung und an der Ausgangsöffnung im Querschnitt jedes beliebige Profil haben. Ist vorgesehen, dass eine Röhre bzw. ein Schlauch angeschlossen wird, so kann der Querschnitt der entsprechenden Eingangsöffnung und/oder Ausgangsöffnung beispielsweise kreisförmig sein.

Der Strömungskanal ist wie bereits vorangehend angegeben von einer umlaufenden Umfangswand umgeben. Die Umfangswand kann über die gesamte Länge des Ventilkörpers aus einem einheitlichen Material gefertigt sein. Die Umfangswand ist typischerweise über die Länge des Ventilkörpers aus einem elastischen Material gefertigt. Die Umfangswand kann in manchen Ausführungsformen allerdings auch nur über die Länge, über die sich der Strömungskanal in einem zentralen Schließbereich des Ventilkörpers befindet, aus einem elastischen Material gefertigt sein. Die Umfangswand ist somit zumindest in einem zentralen Schließbereich gegenüber äußeren Kräften nachgebend oder flexibel, ohne dass dabei die Integrität der Umfangswand in Mitleidenschaft gezogen wird. Die Umfangswand kann auch über die gesamte Länge im Ventilkörper gegenüber äußeren Kräften nachgebend oder flexibel, ohne dass dabei die Integrität der Umfangswand in Mitleidenschaft gezogen wird.

In einigen Ausführungsformen verändert sich die Form des Querschnitts des Strömungskanals des Ventilkörpers im Querschnitt ausgehend von der Eingangsöffnung und/oder der Ausgangsöffnung bis zu einer Position, an der die Kraftübertragungselemente oder das Kraftübertragungselement und das Fixierelement mit der Umfangswand verbunden sind. An dieser Position enthält der Querschnitt des Strömungskanals mindestens zwei lineare Abschnitte. In einigen Ausführungsformen verändert sich die Form des Profils des Strömungskanals des Ventilkörpers im Querschnitt über einen zentralen Bereich des Ventilkörpers, der sich zwischen Eingangsöffnung und Ausgangsöffnung befindet. Ein solcher zentraler Bereich des Ventilkörpers wird hier auch als zentraler Schließbereich bezeichnet. In diesem zentralen Schließbereich befindet sich die Position, an der die Kraftübertragungselemente oder das Kraftübertragungselement und das Fixierelement mit der Umfangswand des Strömungskanals verbunden sind. Der zentrale Schließbereich zeichnet sich dadurch aus, dass die umlaufende Wand des Strömungskanals in ihrem Querschnitt entlang ihrer gesamten Länge im zentralen Schließbereich eine Fläche umschließt, deren Größe zumindest im Wesentlichen über den gesamten zentralen Schließbereich einheitlich ist.

Der zentrale Schließbereich kann sich in einigen Ausführungsformen über etwa ein Viertel bis über 90 % der gesamten Länge des Strömungskanals im Ventilkörper erstrecken. In einigen Ausführungsformen kann sich der zentrale Schließbereich über etwa ein Drittel bis etwa 80 % der gesamten Länge des Strömungskanals im Ventilkörper erstrecken.

Im zentralen Schließbereich hat darüber hinaus die umlaufende Wand (Umfangswand) des Strömungskanals im Querschnitt eine Form, die von der Kreisform verschieden ist. Jede andere Form außer einer kreisrunden Form ist jedoch grundsätzlich für die Form des Querschnitts des Strömungskanals geeignet. Typischerweise hat der Querschnitt der Umfangswand im zentralen Schließbereich eine Form, die einen oder mehrere lineare Abschnitte enthält. Der Querschnitt kann beispielsweise die Form eines Polygons wie z.B. eines Dreiecks oder eines Vierecks haben. Ein entsprechendes Viereck kann beispielsweise ein Quadrat oder ein Rechteck sein. Als weiteres Beispiel kann der Querschnitt die Form eines regulären, also konvexen, Trapezes haben, z.B. die Form eines gleichschenkligen Trapezes. Auch die Form eines Hexagons wie z.B. eines regelmäßigen Sechsecks kann der Querschnitt haben. Ebenso kann der Querschnitt die Form eines Heptagons haben, z.B. die Form eines ebenen, regelmäßigen Siebenecks.

Die Kraftübertragungselemente sind in der Regel Elemente, die im zentralen Schließbereich fest mit der Umfangswand des Strömungskanals verbunden sind. Sie können dabei einstückig als Bestandteil der Umfangswand vorgesehen sein. Ein Kraftübertragungselement ist dazu in der Lage, eine Druck- oder Zugkraft auf die Umfangswand des Strömungskanals einwirken zu lassen. Ein Beispiel eines Kraftübertragungselements ist ein Stempel. Ein solcher Stempel kann in die Umfangswand integriert sein oder lösbar an sie gekoppelt sein. In letzterem Fall steht in der Regel eine Fläche des Stempels mit einer Fläche der Umfangswand in Kontakt und ein Herabdrücken oder Anheben des Stempels führt zu einem entsprechenden Absenken oder Anheben der kontaktierten Fläche der Umfangswand des Strömungskanals. Da die Umfangswand des Strömungskanals aus elastischem Material gefertigt ist, kommt es dabei zu einer Veränderung der Form des Querschnitts der Umfangswand des Strömungskanals.

Im Falle zweier einander gegenüberliegender, parallel angeordneter Stempel wirkt eine Druckkraft, die auf einen der beiden Stempel oder auf die beiden Stempel einwirkt, jeweils in Richtung des gegenüberliegenden Stempels. Eine Zugkraft auf einen oder beide Stempel wirkt dementsprechend entgegen der Richtung des gegenüberliegenden Stempels. Wirkt eine Kraft auf einen oder zwei gegenüberliegende Stempel ein, so wird der Querschnitt des Strömungskanals zusammengedrückt oder auseinandergezogen. Dabei bewegen sich die gegenüberliegenden Stempel und somit die entsprechenden gegenüberliegenden Wandflächen des Querschnitts des Strömungskanals so, dass sich jeder Punkt einer der gegenüberliegenden Flächen um die gleiche Strecke relativ zur gegenüberliegenden Fläche bewegt. Die beiden Stempel und die entsprechenden Wandabschnitte bleiben somit parallel angeordnet.

Wirkt eine Druckkraft nur auf einen von zwei sich in Bezug auf eine Spiegelachse einander gegenüberliegenden Stempeln ein, so kann sich der Stempel, auf den die Kraft wirkt, einseitig auf den gegenüberliegenden Stempel hin zu bewegen. Relativ zu einem außenstehenden Betrachter kann in diesem Fall der Stempel, auf den keine Kraft einwirkt, als fixes Element erscheinen, während sich der übrige Querschnitt der Umfangswand in seiner Form verändert und insbesondere der gegenüberliegende Stempel in seiner Position verschoben wird.

Im Falle zweier einander gegenüberliegender, parallel angeordneter Stempel kann der Querschnitt der Umfangswand an der Position, an der die Stempel mit der Umfangswand verbunden sind, eine Spiegelebene enthalten, die mittig zwischen den beiden gegenüberliegenden Stempeln angeordnet ist. Wirkt eine Druckkraft nur auf einen von zwei sich in Bezug auf eine Spiegelachse einander gegenüberliegenden Stempeln ein, so kann sich der Stempel, auf den die Kraft wirkt, einseitig in Richtung auf die Spiegelebene zu bewegen und dabei für einen äußeren Betrachter die Spiegelebene in Richtung des gegenüberliegenden Stempels verschieben. Dabei verschiebt sich die Spiegelebene in der Regel selbst in Richtung auf den anderen Stempel. Wirkt eine Druckkraft von gleichem Betrag auf zwei sich in Bezug auf eine Spiegelebene einander gegenüberliegende Stempel ein, so können sich die Stempel aufeinander zu bewegen, ohne dass sich für einen äußeren Betrachter die Spiegelebene verschiebt. Wirken Druckkräfte von unterschiedlichem Betrag auf zwei sich in Bezug auf eine Spiegelebene einander gegenüberliegenden Stempeln ein, so können sich für einen äußeren Betrachter alle Elemente des Querschnitts der Umfangswand verändern und insbesondere sich auch die Spiegelebene verschieben. Auch verschieben sich in einem solchen Fall in der Regel alle Elemente des Querschnitts in Bezug auf weitere Elemente des Quetschventils wie z.B. Verbindungsglieder, Röhren oder ein Gehäuse. Für einen Betrachter auf beispielsweise einem der Stempel oder der Spiegelebene sind dagegen alle drei Fälle nicht voneinander zu unterscheiden.

Kraftelemente, die durch Kopplungselemente für Kraft übertragende Vorrichtungen definiert sind, z.B. eine Bohrung, einen Steg, eine Lasche oder eine Nut enthaltende Kopplungselemente, können auf gegenüberliegenden Seiten einer Spiegelachse angeordnet sein. In Ausführungsformen mit einem Kraftübertragungselement und einem Fixierelement können das Kraftübertragungselement und das Fixierelement auf gegenüberliegenden Seiten einer Spiegelachse angeordnet sein.

Ist die Spiegelachse in einem solchen Fall horizontal ausgerichtet, so kann wie im obigen Beispiel eines Stempels eine Druckkraft, die auf einen oder zwei Kraftelemente zweier gegenüberliegender Kraftelemente einwirkt, jeweils in Richtung dieser Spiegelachse wirken. Entsprechend kann in Ausführungsformen mit einem Kraftübertragungselement und einem Fixierelement eine Druckkraft, die auf das Kraftelement einwirkt, jeweils in Richtung der Spiegelachse wirken. Ebenso kann eine Zugkraft, die auf einen oder zwei Kraftelemente zweier gegenüberliegender Kraftelemente einwirkt oder die auf das Kraftelement bei Ausführungsformen mit Kraftübertragungselement und Fixierelement einwirkt, entgegen der Richtung des gegenüberliegenden Kraftübertragungselementes bzw. des Fixierelements wirken. In dem Fall, dass sich zwei entsprechende Kraftelemente in Bezug auf die Spiegelachse gegenüberliegen, kann eine Druckkraft dabei jeweils in Richtung des gegenüberliegenden Kraftübertragungselementes wirken. Ebenso kann in einem solchen Fall eine Zugkraft, die auf einen oder beide der Kraftübertragungselemente einwirkt, entgegen der Richtung des gegenüberliegenden Kraftübertragungselementes wirken. Entsprechend kann eine Druckkraft oder eine Zugkraft in Richtung eines gegenüberliegenden Fixierelements bzw. entgegen der Richtung eines gegenüberliegenden Fixierelements wirken. Es gelten dann sinngemäß die vorangehenden Ausführungen für sich gegenüberliegende Stempel.

Kraftübertragungselemente, die durch Kopplungselemente für Kraft übertragende Vorrichtungen definiert sind, können sich beispielsweise auch in Bezug auf eine Symmetrieachse gegenüberliegen. In einem solchen Fall kann eine Druckkraft, die auf einen oder zwei Kraftübertragungselemente zweier gegenüberliegender Kraftübertragungselemente einwirkt, jeweils in Richtung des - bezogen auf die Symmetrieachse - gegenüberliegenden Kraftübertragungselementes wirken. Ebenso kann eine Zugkraft, die auf einen oder zwei Kraftübertragungselemente zweier gegenüberliegender Kraftübertragungselemente einwirkt, entgegen der Richtung des gegenüberliegenden Kraftübertragungselementes wirken. Die Richtung einer solchen Kraft kann dabei in einigen Fällen eine vertikale Richtung sein. In einigen Ausführungsformen kann die Richtung einer solchen Kraft von einer vertikalen Richtung verschieden sein. Wirkt eine Kraft auf einen oder zwei sich in Bezug auf die Symmetrieachse gegenüberliegende Kraftübertragungselemente ein, so wird der Querschnitt des Strömungskanals zusammengedrückt oder auseinandergezogen. Befinden sich die Kraftübertragungselemente jeweils an einem Punkt, an den zwei lineare Abschnitte der Umfangswand beidseitig angrenzen, so wird bei Krafteinwirkung typischerweise der Winkel verändert, unter dem diese linearen Abschnitte des Querschnitts zueinander ausgerichtet sind. Bei Einwirken einer Zugkraft kann beispielsweise dieser Winkel verkleinert werden. Bei Einwirken einer Druckkraft kann beispielsweise der Winkel, unter dem diese beiden linearen Abschnitte zueinander ausgerichtet sind, vergrößert werden. Die Anordnung von linearen Abschnitten des Querschnitts des Strömungskanals zueinander wird somit verändert. Wirken in solchen Fällen gleich große Druckkräfte oder Zugkräfte auf sich in Bezug auf eine Symmetrieachse gegenüberliegende Kraftübertragungselemente ein, so kann in einigen Fällen die absolute Anordnung der Symmetrieachse im Raum unverändert bleiben. Insbesondere wenn auf unterschiedliche Kraftübertragungselemente unterschiedliche Druck- oder Zugkräfte einwirken, z.B. wenn nur auf einige Kraftübertragungselemente Druck- oder Zugkräfte einwirken, so kann sich die absolute Anordnung der Symmetrieachse im Raum verschieben. So kann sich beispielsweise eine Symmetrieachse in vertikaler Richtung verschieben.

Unabhängig von den einwirkenden Kräften kann in einigen Ausführungsformen die relative Anordnung der Symmetrieachse in Bezug auf z.B. die Kraftübertragungselemente sich lediglich dadurch ändern, dass sich die Abstände der Kraftübertragungselemente zur Symmetrieachse verändern. Entsprechendes gilt für den Fall eines einem Fixierelement gegenüberliegenden Kraftübertragungselementes.

Typischerweise werden linearere Abschnitte der Umfangswand von entsprechenden Flächen des Strömungskanals definiert, die so zueinander ausgerichtet sind, dass sie in einem geschlossenen Zustand des Ventilkörpers aneinander anliegen, also in flächigem Kontakt zueinander stehen. Die Querschnittsform des Ventilkörpers im Bereich des zentralen Schließbereichs ist so gewählt, dass in einem geschlossenen Zustand des Ventilkörpers, in dem der Strömungskanal völlig zusammengedrückt ist, an der Position, an der die Kraftübertragungselemente oder das Kraftübertragungselement und das Fixierelement mit der Umfangswand verbunden sind, im Querschnitt an jeder Stelle die gleiche Druckkraft über den Mechanismus auf das Material der Umfangswand ausgeübt wird und der Querschnitt völlig geschlossen ist. Das Ventil kann auf diese Weise den Fluss auch bei anliegendem Betriebsdruck vollständig unterbrechen.

Ein Kraftübertragungselement des Ventilkörpers kann entlang einer beliebig gewählten Bahn gegen ein weiteres Kraftübertragungselement oder gegen ein Fixierelement verschiebbar sein. In einigen Ausführungsformen ist ein Kraftübertragungselement des Ventilkörpers entlang eines linearen Weges gegen ein weiteres Kraftübertragungselement oder gegen ein Fixierelement verschiebbar. In einigen Ausführungsformen ist ein Kraftübertragungselement des Ventilkörpers entlang eines zickzackförmigen Weges gegen ein weiteres Kraftübertragungselement oder gegen ein Fixierelement verschiebbar. In einigen Ausführungsformen ist ein Kraftübertragungselement entlang einer bogenförmigen Bahn, beispielsweise einer Bahn mit einer konstanten Krümmung, gegen ein weiteres Kraftübertragungselement oder gegen ein Fixierelement verschiebbar. In einigen Ausführungsformen ist ein Kraftübertragungselement entlang einer Bahn mit einer sich verändernden Krümmung, beispielsweise einer Bahn mit einer kontinuierlich zunehmenden Krümmung, gegen ein weiteres Kraftübertragungselement oder gegen ein Fixierelement verschiebbar.

In Ausführungsformen, in denen ein erstes und ein zweites Kraftübertragungselement im zentralen Schließbereich mit der Umfangswand verbunden sind, können diese Kraftübertragungselemente entlang einer beliebig gewählten Bahn gegeneinander verschiebbar sein. In einigen Ausführungsformen sind die Kraftübertragungselemente des Ventilkörpers entlang eines linearen Weges gegeneinander verschiebbar. In einigen Ausführungsformen sind die Kraftübertragungselemente entlang eines zickzackförmigen Weges gegeneinander verschiebbar. In einigen Ausführungsformen sind die Kraftübertragungselemente entlang einer bogenförmigen Bahn, beispielsweise einer Bahn mit einer konstanten Krümmung, verschiebbar.

In einigen Ausführungsformen enthält ein Ventilkörper eines hier offenbarten Quetschventils ein Fixierelement. Ein Fixierelement sorgt für das Beibehalten einer Position des Ventilkörpers beim Einwirken einer Kraft auf ein Kraftübertragungselement. Ein Fixierelement kann daher als Element für eine Gegenkraft im Sinne des Gesetzes von actio und reactio nach Newton verstanden werden. Vor diesem Hintergrund wird deutlich, dass ein Fixierelement nicht erforderlich ist, wenn mehr als ein Kraftübertragungselement mit der Umfangswand verbunden sind. Insofern unterscheidet sich ein Fixierelement von einem Kraftübertragungselement darin, dass es nicht in der Lage sein muss, eine Kraft auf die Umfangswand zu übertragen. Es muss dagegen in der Lage sein, einer Kraft, die auf die Umfangswand ausgeübt wird, insoweit einen Widerstand entgegenzusetzen, dass die Position der Umfangswand durch die einwirkende Kraft im Wesentlichen nicht verändert wird. Ein Fixierelement muss daher beispielsweise nicht an eine Kraft übertragende Vorrichtung koppelbar sein, z.B. über eine formschlüssige oder eine kraftschlüssige Verbindung. Ein Fixierelement muss lediglich an eine beliebige feste Position außerhalb des Ventilkörpers koppelbar oder mit ihr verbunden sein. Dabei kann es sich beispielsweise um ein Gehäuse des Quetschventils handeln.

Daher ist ein Fixierelement zumindest im Wesentlichen senkrecht zur Flussrichtung des Strömungskanals angeordnet. Im Querschnitt der Umfangswand an der Position, an der das Fixierelement und ein oder mehrere Kraftübertragungselemente mit der Umfangswand verbunden sind, kann ein Fixierelement in jedem beliebigen Winkel zu einem Kraftübertragungselement angeordnet sein. In einigen Ausführungsformen sind ein Fixierelement und ein Kraftübertragungselement im Querschnitt einander gegenüber angeordnet. Ein Fixierelement kann grundsätzlich jede beliebige Form haben, solange es dazu geeignet ist einer Kraft, die auf die Umfangswand durch ein Kraftübertragungselement ausgeübt wird, einen ausreichenden Widerstand entgegenzusetzen. Ein Fixierelement kann in einigen Ausführungsformen durch einen Bestandteil der Gehäusewand des Quetschventils definiert werden.

Ein Fixierelement kann an einer Position oder einem Abschnitt des Querschnitts der Umfangswand mit dieser verbunden sein, an der auch ein Kraftübertragungselement mit der Umfangswand verbunden sein kann, vgl. die vorangehenden Ausführungen. So kann ein Fixierelement beispielsweise mit einem Abschnitt des Querschnitts der Umfangswand verbunden sein, der eine Ecke selbiger definiert, beispielsweise die Ecke eines Polygons. Es kann sich dabei z.B. um eine Ecke eines n-eckigen Segments handeln, wobei n eine Zahl von 3 bis 12 ist, beispielsweise eine Zahl von 3 bis 8 oder eine Zahl von 4 bis 6.

Bei rückblickender Betrachtung sollte es für den Fachmann klar erkennbar sein, dass das Regelverhalten bei herkömmlichen Schlauchquetschventilen aufgrund der Geometrie und der Geometrieänderung während des Schließvorgangs sowie aufgrund der Schlauchtoleranzen nicht optimal ist. Eine merkliche Flussänderung beim Quetschen eines Schlauches tritt erst ab ca. 25% des Gesamtweges vor dem Schließpunkt ein. Erst dieser kurze Weg ist der eigentliche Bereich, der für eine Regelung bei einem herkömmlichen Schlauchquetschventil nutzbar ist. Aufgrund dieses kurzen Weges muss aber das Ventil in der Lage sein, sehr kleine Positionsschritte zu verfahren ohne das es zum Schwingen der Regelstrecke kommt. Der Positionserfassung sind aber wiederum hinsichtlich ihrer Genauigkeit Grenzen gesetzt, beispielsweise durch Auflösung des Wegmesssystems oder durch Spiel in den mechanischen Teilen, welche zu einer Hysterese führen.

Bislang kommerziell erhältliche Membranregelventile zeichnen sich demgegenüber durch ein besseres Regelverhalten aus. Allerdings ist bei Membranregelventilen meist eine Art Sattel oder ein vergleichbares Element im Durchflussbereich nötig, auf dem im geschlossenen Zustand die Membran dichtet. Dies führt zu einem nicht optimalen Strömungsverhalten im Durchflussbereich und zu starken Scherkräften. Scherkräfte sind insbesondere bei der Herstellung von Biopharmazeutika und im speziellen bei der Produktion von Peptiden und Proteinen unerwünscht, da das Zielmolekül im Verlaufe des Prozesses Schaden nehmen könnte. Aufgrund der Geometrie kommt es bei Membranregelventilen selbst im geöffneten Zustand zu unerwünschten Druckabfällen, welche den Einsatz in bestimmten biopharmazeutischen Prozessen erschwert.

Ein hier offenbartes Quetschventil enthält demgegenüber einen Ventilkörper, der diese Nachteile von gewöhnlichen Membranregelventilen und Schlauchquetschventilen vermeidet.

Ein hier offenbartes Quetschventil mit einem hier beschriebenen Ventilkörper erlaubt es, Strömungsverluste durch Umlenkungen zu vermeiden und somit insbesondere das Auftreten von Scherkräften zu vermeiden. Beispielsweise kann eine Zerstörung von im Medium enthaltenen biologischen Zellen durch Scherkräfte vermieden werden. Auf diese Weise wird ein schonender Transport eines flüssigen Mediums in Gegenwart des Quetschventils möglich. Auch lässt sich durch die Konstruktion des hier offenbarten Ventilkörpers das Auftreten von Totraumgebieten infolge von Hinterschneidungen bzw. schroffen Übergängen vermeiden.

Im Querschnitt umgibt die Umfangswand des Strömungskanals eine Fläche, die das Innere des Strömungskanals im Querschnitt definiert. Diese Fläche ist in einem Ventilkörper eines hier offenbarten Quetschventils über den gesamten Ventilkörper im Wesentlichen konstant. In typischen Ausführungsformen ist diese Fläche über den gesamten Ventilkörper konstant.

Der Volumenstrom bzw. die Durchflussrate im Innern des Strömungskanals ist bei einem nicht-kompressiblen Fluid in einem Rohr an allen Positionen entlang des Rohres gleich, so dass auch entlang des Ventilkörpers ein einheitlicher Volumenstrom herrscht. Der Volumenstrom (Engl. volumetric flow rate oder volume velocity) gibt an, welches Volumen eines Fluids in einer Zeiteinheit durch einen bestimmten Querschnitt hindurchtritt. Er wird in der Regel in der SI-Einheit m³/s (Kubikmeter pro Sekunde) angegeben. Der Volumenstrom ist proportional zur gemittelten Strömungsgeschwindigkeit einer Rohrströmung und ist das Produkt aus der gemittelten Strömungsgeschwindigkeit über einen sich ergebenden Strömungsquerschnitt und der Fläche dieses Querschnitts an der betreffenden Stelle. Es ist die gemittelte Strömungsgeschwindigkeit zu Grunde zu legen, da das Strömungsprofil im Querschnitt nicht in jedem Abstand von der Umfangswand gleich sein kann.

Da die Fläche des Strömungskanals in einem hier offenbarten Quetschventil zumindest im Wesentlichen über den gesamten Ventilkörper konstant ist, ist somit im gesamten Ventilkörper auch die mittlere Strömungsgeschwindigkeit entlang des Strömungskanals zumindest im Wesentlichen konstant. In typischen Ausführungsformen ist die mittlere Strömungsgeschwindigkeit entlang des Strömungskanals über den gesamten Ventilkörper konstant.

Das Quetschventil, inklusive z.B. des Ventilkörpers, sowie seine Verwendung werden hier auch durch die im Folgenden gezeigten und diskutierten Figuren und Beispiele genauer erläutert. Dabei ist zu beachten, dass die Figuren und Beispiele nur beschreibenden Charakter haben und nicht dazu gedacht sind, die zu Grunde liegende Erfindung in irgendeiner Form einzuschränken.

Unter Bezug auf die beigefügten Figuren kann in einer Ausführungsform der Ventilkörper mit zwei sich in Bezug auf die Strömungsrichtung im Strömungskanal gegenüberliegenden Kraftübertragungselementen verschließen und/oder öffnen lassen. Eine solche Ausführungsform ist in den Figuren 1, 3 bis 7, 9, 10 und 12 gezeigt. Eine entsprechende Ausführungsform zeigt auch Fig. 2. Die Kraftübertragungselemente (19) enthalten in diesem Fall jeweils eine Bohrung (8), in die jeweils eine Kraft übertragende Vorrichtung (11) in Form eines Bolzens einer Gehäuseschließvorrichtung (6) einschiebbar ist. Wie an Hand dieses Beispiels ersichtlich, ist eine spielfreie Kopplung von Kraftübertragungselement und Kraft übertragender Vorrichtung (11) möglich und Ausführungsformen mit einer leicht steckbar passenden Kraft übertragenden Vorrichtung (11) können eine einfache Handhabung ermöglichen.

Wie in den Abbildungen gezeigt, kann beispielsweise ein gewöhnlicher Schlauch mit kreisrundem Querschnitt mit dem Quetschventil verbunden werden. Ein Verbindungsglied (2) oder ein in Fig. 2 gezeigtes Verbindungselement (2a) des Ventilkörpers kann dabei ebenfalls einen Strömungskanal von kreisrundem Querschnittsprofil enthalten. Wie Fig. 1 zu entnehmen ist, ist in typischen Ausführungsformen im zentralen Schließbereich (18) des Ventilkörpers (4) die Umfangswand (21) des Strömungskanals (20) so gestaltet, dass sich entlang der Strömungsrichtung von der Eingangsöffnung (24) bzw. der Ausgangsöffnung (25) aus in Richtung der in Fig. 3 gezeigten Ebene A-A über eine definierte Strecke der Querschnitt der Umfangswand (21) dem Querschnitt (30) an der Position stufenlos annähert, an der die Kraftübertragungselemente (19, 19') mit der Umfangswand verbunden sind. Der Querschnitt der Umfangswand an dieser Position ist in den Figuren mit Bezugszeichen 30 gekennzeichnet.

In der Ausführungsform, die in Figuren 1, 3 bis 7, 9, 10 und 12 gezeigt ist, hat der Querschnitt (30) im vollständig geöffneten Zustand eine kreisrunde Fläche, die der Kreisfläche des Querschnittes des angeschlossenen Schlauchs entspricht. Im geöffneten Zustand ist somit in einem hier offenbarten Quetschventil ein umlenkungsfreies Strömungsprofil möglich. Beim Durchtritt durch den Ventilkörper wird durchströmende Flüssigkeit in diesem Zustand keiner Veränderung des Strömungskanals ausgesetzt. Das gleiche gilt entsprechend für ein durchströmendes Gas. Es muss somit zumindest im Wesentlichen zu keiner Beeinflussung der Strömung kommen, insbesondere zu keinerlei Drosselung der Strömung.

Die Wandstärke des Ventilkörpers kann sich entlang der Strömungsrichtung von der Eingangs- und/oder Ausgangsöffnung hin zum zentralen Schließbereich ändern, beispielsweise in stufenloser Form. Auf diese Weise kann dazu beigetragen werden, dass beim Öffnen und Schließen des Quetschventils die größten Verformungen im zentralen Schließbereich auftreten.

Die Kraftübertragungselemente (19, 19') können in Ausführungsformen, wie sie z.B. in Fig.2 oder Fig. 7 gezeigt sind, als Versteifung der Umfangswand (21) aufgefasst werden. Je nach Ausgestaltung der Umfangswand (21) im Bereich des Querschnitts (30) kann ein Kraftübertragungselement (19, 19') sich im vollständig geöffneten Zustand über einen beliebig großen Anteil an der maximalen Ausdehnung des Querschnitts (30) erstrecken. So kann sich wie in Fig. 4 gezeigt ein Kraftübertragungselement (19, 19') beispielsweise über etwa 70 % oder mehr der maximalen Ausdehnung des Querschnitts (30) erstrecken. In anderen Ausführungsformen kann sich ein Kraftübertragungselement (19, 19') über einen wesentlich geringeren Anteil der maximalen Ausdehnung des Querschnitts (30) erstrecken, beispielsweise etwa 40 % oder weniger.

Wie an Hand von z.B. Fig. 3 nachvollziehbar, kann eine Druck- oder Zugkraft über in die Bohrungen (8) der Kraftübertragungselemente (19, 19') geschobene Bolzen (11) erfolgen, vgl. z.B. Fig. 1. Dabei bewegen sich die Bolzen (11) und somit die linearen Bereiche (23) der Umfangswand (21) parallel zueinander. Werden die Bolzen (11) aufeinander zu oder voneinander weg bewegt, so drücken diese die Umfangswand (21) im Querschnitt zusammen bzw. ziehen sie auseinander. Dadurch bewegen sich die linearen Abschnitte (23) der Umfangswand aufeinander zu oder voneinander weg. Die nicht linearen Bereiche der Umfangswand werden dabei gedehnt oder gestaucht.

Die Umfangswand kann Punkte und/oder Segmente verminderter Wandstärke enthalten, die auf Grund der geringeren Wandstärke nachgiebiger bzw. flexibler als die umgebenden Bereiche der Umgebungswand sind. Es kann sich beispielsweise um Punkte oder Segmente ähnlich einem Faltenbalg oder in Form eines integrierten Filmscharniers handeln. Zusätzlich kann die Umfangswand in nicht linearen Bereichen ein Material höherer Verformbarkeit oder Elastizität als in den linearen Bereichen der Umfangswand enthalten. Dabei können die Bereiche aus einem verformbareren / elastischeren Material zugleich Bereiche dünnerer Wandstärke sein. In der in Fig. 4 gezeigten Ausführungsform sind beispielsweise Punkte verminderter Wandstärke (9) vorhanden.

Die Umfangswand kann auch Punkte und/oder Segmente erhöhter Wandstärke enthalten, die auf Grund der höheren Wandstärke weniger nachgiebiger bzw. weniger flexibel sind als die umgebenden Bereiche der Umgebungswand. So kann an Positionen, an denen eine Beanspruchung oder ein Verbiegen der Umfangswand vermieden werden soll, durch Erhöhung der Wandstärke die Wahrscheinlichkeit einer Verformung verringert werden. Dies kann beispielsweise im Querschnitt in linearen Bereichen der Umfangswand der Fall sein. Zusätzlich kann die Umfangswand in entsprechenden Bereichen ein Material höherer Steifheit als beispielsweise in den nicht-linearen Bereichen der Umfangswand enthalten. Bereiche höherer Wandstärke können zusätzlich aus einem ein Material höherer Steifheit gefertigt sein.

Die Punkte und/oder Segmente verminderter Wandstärke können dazu beitragen, dass sich bei Einwirkung einer Druck- oder Zugkraft auf ein Kraftübertragungselement (19, 19') im zentralen Schließbereich (18) eine weitgehend lineare Verformung der Umfangswand (21) entlang der Strömungsrichtung einstellt. Soweit sich diese Verformung bis hin zur Eingangsöffnung und Ausgangsöffnung erstreckt, wird sich eine entsprechende lineare Verformung der Umfangswand dorthin fortsetzen.

Die Bolzen (11) können somit bewirken, dass die Umfangswand im Querschnitt (30) so weit zusammengedrückt wird, dass der Strömungskanal (20) im Querschnitt keine Fläche einnimmt. Die Bolzen (11) können auch bewirken, dass einen entsprechenden Zustand, in dem das Quetschventil verschlossen ist, geöffnet wird. Das Zusammendrücken oder Auseinanderziehen kann so erfolgen, dass sich die gegenüberliegenden beiden lineare Abschnitte (23) der Umfangswand, die als Druckflächen aufgefasst werden können, symmetrisch entlang der Symmetrieachse (7) aufeinander zu bewegen. Ebenso kann sich nur einer der lineare Abschnitte (23) entlang der Symmetrieachse (7) auf den gegenüberliegenden Abschnitt (23) zu bewegen.

Neben der in z.B. Fig. 2 gezeigten Ausführungsform mit einer Bohrung (8) kann ein Kraftübertragungselement (19, 19') jedes beliebige Design haben, das es ermöglicht, an eine entsprechend geformte Kraft übertragende Vorrichtung (11) zu koppeln. In einigen Ausführungsformen kann ein Kraftübertragungselement (19, 19') einen Steg mit einem bestimmten geometrischen Profil enthalten, der beispielsweise an eine Nut in einer Kraft übertragenden Vorrichtung (11) koppelbar ist. So kann ein Kraftübertragungselement (19, 19') ein T-Profil oder ein I-Profil haben. In einigen Ausführungsformen kann ein Kraftübertragungselement (19, 19') ein hammerförmiges Profil oder ein tannenbaumförmiges Profil haben. In einigen Ausführungsformen kann ein Kraftübertragungselement (19, 19') in Form einer Lasche an die Kraft übertragenden Vorrichtung (11) koppelbar sein. Fig. 8 zeigt ein Beispiel eines im Querschnitt viereckigen Kraftübertragungselements (19), das an einer Ecke mit der Umfangswand (21) verbunden ist. Fig. 11 zeigt ein Beispiel eines im Querschnitt kreisförmigen Kraftübertragungselements (19), das von einer entsprechenden Nut oder Aussparung der Kraft übertragenden Vorrichtung (11) aufgenommen werden kann.

In den in Fig. 8 und Fig. 11 gezeigten Ausführungsformen sind die Kraftübertragungselemente (19, 19') zwischen benachbarten linearen Abschnitten (23) der Umfangswand (21) angeordnet. Das Einwirken einer Zug- oder Druckkraft bewirkt, dass sich die Kraftübertragungselemente (19, 19') von der Symmetrieachse (7) des Querschnitts (30) entfernen oder auf diese zubewegen. Dadurch werden die Winkel zwischen den linearen Abschnitten (23) der Umfangswand an der Position der Kraftübertragungselemente (19, 19') vergrößert oder verkleinert. In typischen Ausführungsformen ist in derartigen Ausführungsformen eine Kraft übertragenden Vorrichtung (11) so an ein Kraftübertragungselement (19, 19') gekoppelt, dass eine Kraft weitgehend genau in Richtung der Symmetrieachse (7) oder in entgegengesetzter Richtung wirkt.

Fig. 13 und Fig. 14 zeigen Ausführungsformen, in denen Kraftübertragungselemente (19 bzw. 19, 19'), die Bohrungen (8) enthalten, in einem zentralen Schließbereich (18) mit einer Umfangswand (21) verbunden sind, die im Querschnitt die Form eines Polygons haben - in diesem Fall die Form eines Sechsecks, das von einem regelmäßigen Sechseck verschieden ist. Das Sechseck in Fig. 14 hat dabei drei Paare an gleich langen Seiten, während das Sechseck in Fig. 14 ein Paar sich gegenüberliegender gleich langer Seiten sowie vier weitere Seiten gleicher Länge enthält.

Wie in Fig. 13, Fig. 14 und Fig. 15 gezeigt, kann die Umfangswand in einigen Ausführungformen Vorsprünge oder Randstücke (22) enthalten, die sich an einem Ende des Querschnitts der Umfangswand parallel zur Achse der Bohrung (8) vom Strömungskanal weg erstrecken. Dieses Ende des Querschnitts kann typischerweise ein Segment sein, in dem ein Kraftübertragungselement (19) mit der Umfangswand verbunden ist. Diese Vorsprünge (22) können dazu beitragen, eine Kraft von einer Kraft übertragenden Vorrichtung gleichmäßig auf die Umfangswand des Strömungskanals einwirken zu lassen. Diese Vorsprünge (22) können beispielsweise auch beim Eintreten einer Verformung der Umfangswand beim Einwirken einer Druckkraft durch ein Kraftübertragungselement (19) auf das gegenüberliegende Kraftübertragungselement (19'), eine Führung für zwischen den Kraftübertragungselementen seitlich nach außen drängende Wandabschnitte bereitzustellen.

Fig. 14 zeigt des Weiteren ein einfaches Beispiel eines Fixierelements (26). In diesem Fall ähnelt das Fixierelement (26) vom Design her dem Kraftübertragungselement (19), enthält jedoch keine Bohrungen (8) und kann daher keinen Bolzen (11) aufnehmen. Wie bereits vorangehend erläutert, kann die Gestaltung des Fixierelements unabhängig von der Gestaltung eines vorhandenen Kraftübertragungselements vorgenommen sein.

Fig. 15 veranschaulicht einen Auf- oder Abwärtshub, der einen oder zwei einander gegenüberliegende Kraftübertragungselemente (19, 19') bewegt. Fig. 15A veranschaulicht den Fall, in dem zwei gleich große Kräfte auf die beiden sich gegenüberliegenden Kraftübertragungselemente (19, 19') einwirken. Dabei kann es sich um Zugkräfte handeln, symbolisiert durch Pfeile nach außen, oder um Druckkräfte, symbolisiert durch Pfeile nach innen. Wie durch den angedeuteten Schlauch (3) verdeutlicht, verschieben sich beispielsweise die Ebenen, in denen jeweils die Bohrungen (8) liegen um die gleiche Strecke in Richtung einer zentralen horizontalen Symmetrieebene (10). Letztere bleibt dabei an gleicher Position.

Fig. 15B veranschaulicht den Fall, in dem eine Kraft ausschließlich auf das erste Kraftübertragungselement (19) einwirkt. An die Stelle des zweiten Kraftübertragungselements (19') kann auch ein Fixierelement treten. In diesem Fall bleibt in Bezug auf den angedeuteten Schlauch (3) die untere Ebene, in der die Bohrungen (8) des zweiten Kraftübertragungselements (19') liegen, an unveränderter Position. Die Ebene (10), die eine zentrale horizontale Symmetrieebene repräsentiert, erfährt demgegenüber einen leichten Hub in Bezug auf den angedeuteten Schlauch (3). Ein stärkerer Hub tritt in der Eben auf, in der die Bohrungen (8) des ersten Kraftübertragungselements (19) liegen.

Neben dem Ventilkörper (4) kann das Quetschventil ein oder zwei Verbindungsglied(er) (2) enthalten. Wie beispielsweise Fig. 5 zu entnehmen ist, kann der Ventilkörper (4) lösbar mit dem Verbindungsglied (2) verbunden sein. Es kann sich z.B. um eine Schlaucholive handeln. In manchen Ausführungsformen, wie in Fig. 2 gezeigt, kann der Ventilkörper (4) an seinen Enden Verbindungselemente (2a) zum Anschluss z.B. eines Schlauchs enthalten. Wie in Fig. 1 gezeigt, kann ein Verbindungsglied (2) bzw. ein Verbindungselement (2a) dabei eine Positionierung des Ventilkörpers (4) innerhalb eines Gehäuses (5, 15) erleichtern und/oder ermöglichen. Die Verwendung eines lösbar gekoppelten und somit ggf. austauschbaren Verbindungsglieds (2) kann dabei eine besondere Wahlfreiheit hinsichtlich Gehäuseform und -dimensionierung ermöglichen. Weiterhin kann die Verwendung eines lösbaren Verbindungsglieds (2) dazu beitragen, eine Positionierung des Ventilkörpers (4) zu ermöglichen, die eine Anordnung von Ventilkörper (4) und Kraft übertragende Vorrichtung (11) gewährleistet, in der die Bewegung einer Kraft übertragende Vorrichtung (11) und damit eines Kraftübertragungselements (19) senkrecht zur Strömungsrichtung verläuft. Dadurch können Schließ- und Öffnungsbewegungen so weit wie möglich senkrecht zur Strömungsachse verlaufen.

Auch eine Positionierung des Ventilkörpers (4) sowie eines mit ihm verbundenen Schlauchs und ggf. eines Verbindungsglieds (2) innerhalb eines Gehäuses (5, 15) kann zu einer Anordnung beitragen, die sicherstellt, dass die Bewegung einer Kraft übertragende Vorrichtung (11) und damit eines Kraftübertragungselements (19) senkrecht zur Strömungsrichtung verläuft.

Das Verbindungsglied (2) bzw. das Verbindungselement (2a) ist typischerweise lösbar mit der Röhre oder dem Schlauch (3) verbunden. Diese einzelnen Komponenten können beispielsweise zusammensteckbar sein. Sind die einzelnen Komponenten miteinander verbunden, so können die entsprechenden Verbindungen zusätzlich nach dem Fachmann bekannten Techniken gesichert werden, beispielsweise durch einen Kabelbinder oder eine Schlauchschelle.

Wie bereits vorangehend angegeben, kann ein Ventilkörper, der ggf. mit einem oder zwei Verbindungsgliedern verbunden ist und weiterhin an eine Röhre oder einen Schlauch gekoppelt ist, in einem Gehäuse angeordnet werden. In der Ausführungsform, die in Figuren 3 bis 7 gezeigt ist, kann der Ventilkörper (4) zusammen mit angeschlossenen Verbindungsgliedern (2) und Schlauch (3) in einem schließbaren Gehäuse (5, 15) angeordnet werden, wie in Fig. 1 gezeigt. Beim Einlegen von verbundenen Ventilkörper (4) Verbindungsgliedern (2) und Schlauch (3) wird in dieser Ausführungsform der Ventilkörper (4) mit den Bohrungen (8) auf die Bolzen (11) geschoben. Weiterhin werden die Verbindungsglieder (2) in Freimachungen (12) des feststehenden Teils des Gehäuses (15) gesteckt. Wie bereits vorangehend angedeutet, trägt das Zentrieren der Verbindungsglieder (2) in dem feststehenden Gehäuse (15) dazu bei, eine zur Schließ- und Öffnungsebene senkrechte Durchströmung zu gewährleisten und die Schlaucheinheit zum System zu fixieren. Wird das Gehäuse geschlossen, in dem das frei bewegliche Gehäuseteil (5) um das Quetschventil geklappt wird, erfolgt eine vollständige Fixierung des Quetschventils im Raum. Dabei werden die Schlaucholiven als Verbindungsglieder (2) durch die Freimachung (13) des beweglichen Gehäuseteils (5) halb umschlossen und die beiden Gehäuseteile (5, 15) durch den Schnapphaken (14) zueinander verriegelt.

Der Inhalt von wissenschaftlichen Artikeln, Patenten und Patentanmeldungen sowie der Inhalt von allen anderen Dokumenten und elektronisch zugänglichen Daten, die hier erwähnt oder zitiert werden, wird hiermit durch Bezug in ihrer Gesamtheit im gleichen Maße aufgenommen, als wäre jede einzelne Veröffentlichung ausdrücklich und individuell als durch Bezug aufgenommen bezeichnet. Im Falle eines Widerspruchs gibt das vorliegende Dokument den Ausschlag. Der Anmelder behält sich das Recht vor, jedwedes, inklusive alles Material und Daten aus jedweden solchen Artikeln, Patenten und Patentanmeldungen oder anderen physischen und/oder elektronischen Dokumenten physisch in dieses Dokument aufzunehmen.

Die Nennung oder Diskussion eines zuvor veröffentlichten Dokuments in dieser Beschreibung sollte nicht notwendigerweise als Anerkenntnis verstanden werden, dass ein solches Dokument zum Stand der Technik zählt oder Allgemeinwissen des Fachmanns darstellt.

Das Quetschventil und seine Verwendung, die hier veranschaulichend beschrieben sind, können in geeigneter Weise ohne ein einzelnes Element oder Elemente, Beschränkung oder Beschränkungen ausgeführt und eingesetzt werden, die hier nicht explizit offenbart sind. Die hier verwendeten Begriffe und Ausdrücke sind ferner als beschreibende Begriffe und nicht als Einschränkung verwendet, und es besteht keine Absicht, beim Verwenden solcher Begriffe und Ausdrücke irgendwelche Äquivalente der gezeigten und beschriebenen Merkmale oder Teile davon auszuschließen. Es wird erkannt, dass verschiedene Abwandlungen im Umfang der beanspruchten Erfindung möglich sind. So sollte daher verstanden werden, dass der Fachmann auf Abwandlungen und Variationen der offenbarten Ausführungsformen zurückgreifen kann, obwohl die hier offenbarten Vorrichtungen und Verfahren für den Fachmann in ausreichendem Detail beschrieben und veranschaulicht sind, um sie anzuwenden, und dass solche Abwandlungen und Variationen als innerhalb des Schutzumfangs der Erfindung befindlich anzusehen sind.

Es sollte somit verstanden werden, dass ein Ventilkörper und seine Verwendung, z.B. in einem Verfahren, die hier in ausreichend Detail beschrieben und anhand bestimmter spezifischer Ausführungsformen veranschaulicht sind, so dass sie vom Fachmann ausgeführt werden können, nicht darauf beschränkt sein sollen; vielmehr werden Abwandlungen und Variationen der beschriebenen Ausführungsformen als im Umfang der Erfindung befindlich angesehen.

Die Erfindung ist hier ausgedehnt und allgemein beschrieben worden. Jede der engeren Spezies und Subgenus-Gruppierungen, die unter die allgemeine Offenbarung fallen, bilden ebenfalls einen Teil des Quetschventils und seiner Verwendung in einem Verfahren. Das schließt die allgemeine Beschreibung des Quetschventils und des Verfahrens mit einer Bedingung oder einer negativen Beschränkung ein, die einen Gegenstand aus dem Genus ausschließen, unabhängig davon, ob der ausgeschlossene Gegenstand hier explizit wiedergegeben ist.

Weitere Ausführungsformen sind in den nachfolgenden Patentansprüchen wiedergegeben. Sind ferner Merkmale oder Aspekte der Erfindung in Form von Markush-Gruppen angegeben, wird der Fachmann erkennen, dass die Erfindung auf diese Weise auch hinsichtlich jedes individuellen Mitglieds oder jeder individuellen Untergruppe von Mitgliedern von Markush-Gruppen beschrieben ist.

Wie ein durchschnittlicher Fachmann im Fachgebiet an Hand der vorliegenden Offenbarung bereitwillig zu schätzen wissen wird, können andere Komponenten, Elemente oder Schritte, die zur Zeit existieren oder später entwickelt werden und die im Wesentlichen das gleiche Ergebnis erzielen wie die hier beschriebenen beispielhaften Ausführungsformen, gemäß der vorliegenden Erfindung ebenfalls eingesetzt werden.

## Patentansprüche

1. Quetschventil (1), aufweisend:
- einen Ventilkörper (4) mit genau einem Strömungskanal (20), der von einer Umfangswand (21) umschlossen ist und an einem ersten Ende eine für den Anschluss eines Verbindungsglieds (2) ausgelegte oder an ein Verbindungselement (2a) angrenzende Eingangsöffnung (24) und an einem zweiten Ende eine für den Anschluss eines Verbindungsglieds (2) ausgelegte oder an ein Verbindungselement (2a) angrenzende Ausgangsöffnung (25) aufweist, und
- ein erstes (19) und ein zweites (19') Kraftübertragungselement, oder ein Kraftübertragungselement (19) und ein Fixierelement (26), die mit der Umfangswand (21) in einem zentralen Schließbereich (18) verbunden sind, der zwischen Eingangsöffnung und Ausgangsöffnung angeordnet ist, wobei das erste und das zweite Kraftübertragungselement (19, 19'), oder das Kraftübertragungselement (19) und das Fixierelement (26), zumindest im Wesentlichen senkrecht zur Flussrichtung des Strömungskanals (20) angeordnet sind, wobei die Umfangswand (21) aus einem elastischen Material besteht, so dass das erste und das zweite Kraftübertragungselement (19), oder das Kraftübertragungselement (19) und das Fixierelement (26), bei Einwirkung einer Druck- oder Zugkraft auf ein Kraftübertragungselement (19) senkrecht zur Flussrichtung des Strömungskanals (20) gegeneinander verschiebbar sind, und
wobei die Umfangswand (21) im zentralen Schließbereich (18) einen von einem Kreis verschiedenen Querschnitt aufweist und
wobei die Umfangswand (21) im Querschnitt eine Fläche des Strömungskanals (20) umschließt, die zumindest im Wesentlichen über den gesamten Ventilkörper (4) konstant ist, sodass die mittlere Strömungsgeschwindigkeit im Strömungskanal (20) an allen Positionen entlang des Ventilkörpers (4) zumindest im Wesentlichen einheitlich ist.

2. Quetschventil nach Anspruch 1, wobei das Quetschventil (1) ohne Einwirkung der Druck- oder Zugkraft in einem offenen Zustand vorliegt und bei Einwirkung der Druckkraft in einen geschlossenen Zustand überführbar ist, in dem sich Innenflächen (29) der Umfangswand (21) im Querschnitt (30) so vollständig kontaktieren, dass im Querschnitt (30) der Strömungskanal (20) vollständig verschlossen ist.

3. Quetschventil nach Anspruch 2, wobei die Umfangswand (21) an der Position, an der die Kraftübertragungselemente (19, 19'), oder ein Kraftübertragungselemente (19) und ein Fixierelement (26), mit der Umfangswand (21) verbunden sind, einen Querschnitt (30) aufweist, der zwei Abschnitte aufweist, die zumindest im Wesentlichen zueinander passgenaue Innenflächen (29) definieren, wobei die zumindest im Wesentlichen zueinander passgenauen Innenflächen (29) bei Einwirkung einer Druckkraft auf ein Kraftübertragungselement (19) flächig miteinander kontaktierbar sind.

4. Quetschventil nach einem der vorangehenden Ansprüche, wobei die Umfangswand (21) an der Position, an der die Kraftübertragungselemente (19, 19') mit der Umfangswand (21) verbunden sind, einen Querschnitt (30) aufweist, der mindestens zwei lineare Abschnitte (23) enthält, wobei entweder ein linearer Abschnitt (23) ein Bereich ist, in dem ein Kraftübertragungselement (19, 19') oder ein Fixierelement (26) mit der Umfangswand (21) verbunden ist oder zwei lineare Abschnitte (23) beidseitig an einen Punkt angrenzen, an dem ein Kraftübertragungselement (19, 19') oder ein Fixierelement (26) mit der Umfangswand (21) verbunden ist.

5. Quetschventil nach einem der vorangehenden Ansprüche, wobei der Querschnitt (30) der Umfangswand (21)
a) eine zentrale Spiegelebene (17) aufweist und/oder
b) eine Symmetrieachse (7) aufweist, wobei die Symmetrieachse dadurch definiert ist, dass der Querschnitt (30) durch eine gedankliche Drehung um einen Winkel von weniger als 360° um die Symmetrieachse (7) in eine von der Ausgangslage nicht unterscheidbare Anordnung überführbar ist.

6. Quetschventil nach Anspruch 5 wobei die Kraftübertragungselemente (19, 19') oder das Kraftübertragungselement (19) und das Fixierelement (26) bei Einwirkung einer Druck- oder Zugkraft auf das Kraftübertragungselement (19)
a) parallel zur Spiegelebene (17) oder in der Spiegelebene (17) gegeneinander verschiebbar sind und/oder
b) in die Richtung zur Symmetrieachse (7) hin oder von der Symmetrieachse (7) weg verschiebbar sind.

7. Quetschventil nach einem der vorangehenden Ansprüche, wobei die Umfangswand (21) im Querschnitt (30) zwei oder mehr Punkte und/oder Segmente verminderter Wandstärke (9) aufweist.

8. Quetschventil nach einem der vorangehenden Ansprüche, wobei jedes Kraftübertragungselement (19, 19') unabhängig über eine formschlüssige oder eine kraftschlüssige Verbindung an eine Kraft übertragende Vorrichtung (11) koppelbar und/oder fixierbar ist oder durch einen Stempel definiert wird.

9. Quetschventil nach Anspruch 8, wobei ein Kraftübertragungselement (19, 19') eine Bohrung, einen Steg oder eine Nut aufweist.

10. Quetschventil nach einem der vorangehenden Ansprüche, wobei der Strömungskanal (20) eine Längsachse des zentralen Schließbereichs (18) definiert, die im Querschnitt (30) eine Symmetrieachse (7) definiert.

11. Quetschventil nach Anspruch 10, wobei die Umfangswand (21) im Querschnitt (30) eine Mehrzahl an Punkten verminderter Wandstärke (9) aufweist und wobei zwei der Mehrzahl an Punkten (9) sich in Bezug auf die Symmetrieachse (7) gegenüberliegen.

12. Quetschventil nach einem der vorangehenden Ansprüche, wobei der Querschnitt (30) der Umfangswand (21) wenigstens ein halbkreisförmiges, ein halbellipsenförmiges, ein parabelförmiges oder ein Polygon-förmiges Segment aufweist.

13. Quetschventil nach einem der Ansprüche 5 bis 12, wobei ein oder mehrere Kraftübertragungselemente (19) dazu ausgelegt ist/sind, eine Krafteinwirkung parallel zur Spiegelebene (17) oder in der Spiegelebene (17) des Strömungskanals (20) zu vermitteln, so dass die Umfangswand (21) so verformt wird, dass sich ihre Ausdehnung senkrecht zur Spiegelebene (17) verändert.

14. Verfahren zum Kontrollieren des Flüssigkeitsflusses durch eine Röhre oder einen Schlauch (3), die/der ein Quetschventil (1) nach einem der Ansprüche 2 bis 13 enthält, wobei das Verfahren aufweist:
im offenen Zustand des Quetschventils (1) eine Druckkraft senkrecht zur Flussrichtung des Strömungskanals (20) auf ein Kraftübertragungselement (19, 19') einwirken lassen, so dass sich der Abstand der Kraftübertragungselemente (19, 19') oder der Abstand zwischen Kraftübertragungselement (19) und Fixierelement (26) verringert und dadurch die Form des Querschnitts (30) verändert, so dass sich im Querschnitt (30) die von der Umfangswand (21) umschlossene Fläche des Strömungskanals (20) zumindest verringert,
im geschlossenen Zustand des Quetschventils (1) eine senkrecht zur Flussrichtung des Strömungskanals (20) auf ein Kraftübertragungselement (19, 19') einwirkende Druckkraft verringern und/oder eine Zugkraft senkrecht zur Flussrichtung des Strömungskanals (20) auf das ein Kraftübertragungselement (19, 19') einwirken lassen, sodass sich der Abstand der Kraftübertragungselemente (19, 19') oder der Abstand zwischen Kraftübertragungselement (19) und Fixierelement (26) vergrößert und dadurch die Form des Querschnitts (30) verändert, so dass sich im Querschnitt (30) miteinander in Kontakt stehende Innenflächen (29) der Umfangswand (21) zumindest so weit voneinander entfernen, dass der Strömungskanal (20) eine von Null verschiedene Fläche einnimmt und damit freigegeben wird.
